# EUROPÄISCHE PATENTSCHRIFT

(11) **EP 2 834 967 B1**
(45) Veröffentlichungstag und Bekanntmachung des Hinweises auf die Patenterteilung: **20.03.2019**
(21) Anmeldenummer: 12715831.9
(22) Anmeldetag: 04.04.2012
(51) Int. Cl.: H04M 3/56

(54) **VERFAHREN ZUR ÜBERTRAGUNG EINER STEUERUNG EINES BESTEHENDEN MEHRFACHGESPRÄCHS AUF EINE APPLIKATION ZUR STEUERUNG EINER KONFERENZ UND COMPUTERPROGRAMMPRODUKT ZUR AUSFÜHRUNG DES VERFAHRENS**
METHOD FOR TRANSFERRING CONTROL OF AN EXISTING CONFERENCE CALL TO AN APPLICATION FOR CONTROLLING A CONFERENCE AND COMPUTER PROGRAM PRODUCT FOR CARRYING OUT THE METHOD
PROCÉDÉ DE TRANSMISSION D'UNE COMMANDE D'UNE COMMUNICATION MULTIPLE EXISTANTE À UNE APPLICATION DE COMMANDE D'UNE CONFÉRENCE ET PRODUIT LOGICIEL INFORMATIQUE SERVANT À RÉALISER CE PROCÉDÉ

(43) Veröffentlichungstag der Anmeldung: 11.02.2015
(73) Patentinhaber: Unify GmbH & Co. KG, 80807 München (DE)
(72) Erfinder: RIST, Claus, 44795 Bochum (DE); GLASER, Martin, 59192 Bergkamen (DE); WILLMANN, Michael, 58454 Witten (DE)
(74) Vertreter: Fuchs Patentanwälte Partnerschaft mbB
(86) Internationale Anmeldenummer: PCT/EP2012/001497
(87) Internationale Veröffentlichungsnummer: WO 2013/149628

(56) Entgegenhaltungen:
- EP-A1- 1 924 051
- US-A1- 2008 159 490
- US-A1- 2008 159 509
- US-A1- 2011 282 962

## Beschreibung

Die Erfindung betrifft ein Verfahren zur Übertragung einer Steuerung eines bestehenden Mehrfachgesprächs, bei dem mindestens zwei Kommunikationsendgeräte durch eine Datenverbindung miteinander verbunden sind, auf eine Applikation zur Steuerung einer Konferenz. Die Erfindung betrifft ferner ein Computerprogrammprodukt zum Ausführen eines solchen Verfahrens.

Im Folgenden wird unter einer Applikation zur Steuerung einer Konferenz ein Programm, insbesondere ein Computerprogramm oder eine Anwendungssoftware, verstanden, die einem Anwender die Steuerung einer Konferenz ermöglicht. Der Begriff "Applikation zur Steuerung einer Konferenz" wird im Folgenden durch den Begriff "Applikation" abgekürzt, wobei bei einer anderen Applikation als der Applikation zur Steuerung einer Konferenz ein Hinweis erfolgt, dass nicht die Applikation zur Steuerung einer Konferenz gemeint ist. Wenn die Applikation auf einem Computer ausgeführt wird, kann durch die Applikation eine Mischung von Sprachsignalen von Teilnehmern einer Konferenz erfolgen. Die Applikation kann insbesondere auf einem Personal Computer, abgekürzt PC genannt, installiert sein und/oder auf dem PC ausgeführt werden. Ein solcher PC wird auch als Mediaserver oder als Applikationsserver bezeichnet. Im Folgenden wird neben einem Computer, auf dem die Applikation installiert ist, also beispielsweise ein Mediaserver oder ein Applikationsserver, die Applikation selbst als Konferenzserver bezeichnet. Insofern wird im Folgenden der Begriff "Konferenzserver" gleichermaßen für eine Ausführung der Applikation in Softwareform, als auch für eine Ausführung dieser Applikation in Hardwareform verwendet. Im Gegensatz zu einer applikationsgesteuerten Konferenz, die durch den Konferenzserver gesteuert wird, erfolgt bei einer Systemkonferenz die Steuerung der Konferenz über ein Userinterface, also eine Benutzerschnittstelle, eines Kommunikationsendgerätes, kurz Endgerät genannt. Eine Steuerung über das Userinterface am Endgerät ist bei einer applikationsgesteuerten Konferenz mittels des Konferenzservers nicht möglich, da der Konferenzserver innerhalb des Systems, das zumindest den Konferenzserver und die im Rahmen der Konferenz von den Teilnehmern der Konferenz verwendeten Endgeräte umfasst, eine eigenständige Komponente des Systems bildet. Die Steuerung der an der Konferenz beteiligten Endgeräte kann über CTI (Computer Telephony Integration), einem Leistungsmerkmal, das von vielen Telefonanlagen unterstützt wird, erfolgen. Während also bei einer Systemkonferenz die CTI-Unterstützung ein 1:1-Abbild der Steuerung des Endgerätes ist, mit dem die Systemkonferenz (über das Userinterface dieses Endgerätes) gesteuert wird, bildet bei einer applikationsgesteuerten Konferenz die CTI-Unterstützung nicht das Userinterface eines Endgerätes ab, sondern den Konferenzserver selbst.

Der Konferenzserver ist dazu eingerichtet, als Server von den Endeinheiten der Teilnehmer der Konferenz jeweils deren Sprachsignale zu empfangen und die gemischten Sprachsignale an die Endeinheiten der Teilnehmer der Konferenz auszusenden. Als Endeinheit eines Teilnehmers kann ein Telefongerät, ein IP-Phone oder ein PC-Client fungieren, wobei auch andere Endeinheiten, beispielsweise ein Mobiltelefon oder ein anderer Server, möglich sind. An einer Konferenz sind mindestens drei Teilnehmer beteiligt, wobei ein Teilnehmer, beispielsweise ein Konferenzleiter, nicht in der Konferenz über Sprache und/oder Daten mit einem anderen Teilnehmer Daten austauschen muss. Daher wird ein von einem Konferenzleiter gehostetes Gespräch zwischen zwei Teilnehmern ebenfalls als Konferenz bezeichnet. Unter einer Konferenz wird insbesondere eine Telefonkonferenz verstanden, bei der die Teilnehmer der Konferenz sich nicht derart an einem gleichen Ort aufhalten, dass diese ohne Einsatz technischer Mittel miteinander kommunizieren können. Die Kommunikation der Teilnehmer erfolgt vielmehr über den Konferenzserver durch Mischung der Sprachsignale der Teilnehmer, wobei eine solche Konferenz beispielsweise als Telefonkonferenz oder als Videokonferenz ausgestaltet sein kann. Bei einer Telefonkonferenz kommunizieren die Teilnehmer lediglich über den Austausch von Sprache unabhängig davon, wie die Sprachsignale der Teilnehmer übertragen werden. Daher kann sowohl eine über ein Festnetz laufende Telefonkonferenz als auch eine Telefonkonferenz, bei der einer oder mehrere Teilnehmer über ein Mobilfunknetz miteinander kommunizieren, als Telefonkonferenz bezeichnet werden.

Daneben ist eine Konferenz in Form einer Videokonferenz möglich, bei der neben dem Austausch von Sprachsignalen der Teilnehmer Bildsignale der Teilnehmer in Echtzeit an andere Teilnehmer übertragen werden. Im Folgenden wird unter einer Konferenz jedoch auch ein Application Sharing verstanden, bei dem neben dem Austausch von Sprach- und Bildsignalen der Teilnehmer weitere Medien mit den Teilnehmern der Konferenz ausgetauscht werden, beispielsweise in Form einer Übertragung von Daten zwischen den Teilnehmern. Diese Daten können in Echtzeit zu den Sprach- und/oder Bildsignalen der Teilnehmer oder zu diesen Signalen zeitverschoben auf einem Bildschirm, beispielsweise dem Bildschirm eines PCs, angezeigt werden. Da für die gleichzeitige Übertragung von Sprach- und/oder Bild- und/oder Datensignalen höhere Datenraten bei der Übertragung erforderlich sind, als bei einer herkömmlichen Telefonkonferenz, bei der lediglich Sprachsignale der Teilnehmer übermittelt werden, kommt bei einem Application Sharing oftmals als Übertragungsmedium ein Intranet oder das Internet zum Einsatz. Allgemein kann der Konferenzserver über ein Netzwerk, beispielsweise das Intranet oder das Internet, mit den Endgeräten der Teilnehmer der Konferenz verbunden sein. In diesem Fall werden die Sprach- und/oder Bild- und/oder Datensignale in Form von Datenpaketen von einem Teilnehmer zu einem anderen Teilnehmer der Konferenz übertragen. Als Übertragungsmedium der von dem Konferenzserver gemischten Sprachsignale, die im Rahmen der Konferenz zu übertragen sind, kann allerdings auch eine herkömmliche schaltungsvermittelte Telekommunikations-Vermittlungsanlage zum Einsatz kommen oder ein Kombination aus einem schaltungsvermittelten Netz und einem paketvermittelnden Netz. Als Übertragungsprotokoll bei einem schaltungsvermittelnden Netz kann beispielsweise ISDN (Integrated Services Digital Network) zum Einsatz kommen, wobei bei einem paketvermittelnden Netz beispielsweise als Übertragungsprotokoll H.323, SIP (Session Inition Protocol) oder TCP/IP (Transmission Control Protocol/Internet Protocol) verwendet werden kann.

Die Applikation wird beispielsweise in Form von Software als OpenScape Office MX oder OpenScape Office LX der Siemens Enterprise Communications GmbH & Co. KG bereitgestellt. Während bei OpenScape Office LX in Form von serverbasierter Unified Communications-Software vorliegt, die plattformunabhängig auf einem Linux-Server betrieben werden kann, ist bei OpenScape Office MX die Applikation als vorinstallierte Software in einem 19-Zoll-Gehäuse als all-inone Unified Communications Lösung vorinstalliert. Insofern kann OpenScape Office MX als Stand-alone-System oder als Gateway für OpenScape Office LX eingesetzt werden. Eine weitere Ausführung der Applikation zur Steuerung einer Konferenz des gleichen Herstellers ist als DAKS (Digitaler Alarm- und Kommunikationsserver), z.B. in Kombination mit einer HiPath 3000, bekannt. Mit einem DAKS können Telefonkonferenzen mit bis zu 60 Teilnehmern über das Internet definiert, gebucht, einberufen und gesteuert werden.

Diese Konferenzserver bieten die Vorteile, einen weiteren Teilnehmer automatisch über die Applikation in eine laufende Konferenz einzubinden. Weiter ist es möglich, eine Zeitansage, beispielsweise eine maximale Zeitdauer der Konferenz, einspielen zu lassen. Die maximale Anzahl der Teilnehmer der Konferenz kann durch Einbezug eines weiteren Teilnehmers erhöht werden. Im Vergleich zu einer Systemkonferenz ist bei der applikationsgesteuerten Konferenz mittels Konferenzserver eine Benutzerführung übersichtlicher, da alle Teilnehmer der Konferenz in einem sogenannten "Conference-Spider" zu sehen sind. Wird ein weiterer Teilnehmer der Konferenz hinzugefügt, bleiben die vorhandenen Teilnehmer der Konferenz in der vorhandenen Gesprächsverbindung, die im Rahmen der Konferenz gebildet ist, so dass für die Teilnehmer der Konferenz keine Konferenzunterbrechungen durch eine Rückfrage auftritt, die bei einem manuellen Erweitern der Konferenz bei einer Systemkonferenz notwendig ist.

Heutige Konferenzserver weisen allerdings den Nachteil auf, dass lediglich einzelne Teilnehmer, genauer ein einzelnes Endgerät eines Teilnehmers des bestehenden Mehrfachgesprächs, in eine applikationsgesteuerte Konferenzschaltung, auch applikationsgesteuerte Konferenz genannt, eingebunden werden können. Die Möglichkeit der Einbindung lediglich eines einzelnen Teilnehmers in eine applikationsgesteuerte Konferenz ist unabhängig von einem gewählten Konferenztyp, beispielsweise einer Ad-Hoc-Konferenz, Meet-Me-Konferenz oder Permanentkonferenz. Um ein Mehrfachgespräch, im Folgenden definiert als Kommunikationsverbindung, bei der mindestens zwei Kommunikationsendgeräte über die Kommunikationsverbindung Daten miteinander austauschen, in eine applikationsgesteuerte Konferenz einzubinden, muss der Teilnehmer der Konferenz, der das Mehrfachgespräch in die Konferenz einbindet, das bestehende Mehrfachgespräch beenden und ein neues Mehrfachgespräch mit den einzubindenden Teilnehmern erneut über den Konferenzserver aufbauen. Das neue Mehrfachgespräch kann dadurch aufgebaut werden, dass der Konferenzserver durch einen sogenannten Konferenzraum, auch Conference Device oder Conference Room genannt, als virtueller Teilnehmer der Konferenz in das aufzubauende Gespräch eingebunden wird. Der Konferenzraum ist daher ein virtuelles Element der Konferenz, um das die Konferenz, genauer die Konferenzschaltung, erweitert wird.

Den an der Konferenzschaltung beteiligten Kommunikationsendgeräten tritt der Konferenzraum wie ein weiteres Kommunikationsendgerät gegenüber. Da der Konferenzraum nicht vordringlich zum Austausch von Sprach- und/oder Bilddaten mit den weiteren Kommunikationsendgeräten der Konferenz verwendet wird, sondern der Steuerung der Konferenz mittels der Applikation dient, wird der Konferenzraum auch als virtueller Teilnehmer, also als Teilnehmer, um den die Konferenz erweitert wird, bezeichnet. Der Konferenzraum erfüllt hierbei die Funktion eines Ankerpunktes für die Applikation zur Steuerung der Konferenz. Der Ankerpunkt ermöglicht es der Applikation, in das Handling des Konferenzsystems einzugreifen und auf diese Weise die Steuerung der Konferenz wahrzunehmen. Als Ankerpunkt für die Applikation kann der Konferenzraum den Master der Konferenz, auch Konferenzmaster oder kurz Master genannt, darstellen. Im Folgenden wird der Master als das Element angesehen, dem die Funktion der Konferenzleitung, auch Masterrolle genannt, zugeordnet ist. Mittels des Masters kann daher ein (menschlicher) Konferenzleiter die Masterrolle, also die Funktion der Konferenzleitung, ausüben. Da der Konferenzraum über die Applikation gesteuert wird, wird auch der Master über die Applikation, die meist vom Konferenzleiter bedient wird, gesteuert.

Der Konferenzserver, der die Applikation in Form von Software bildet (OpenScape Office LX oder MX) oder der die Hardware bildet, auf der die Applikation installiert ist, stellt nun den Konferenzraum zur Verfügung oder beobachtet den Konferenzraum, wobei nacheinander eine Kommunikationsverbindung zu jedem Teilnehmer der Konferenz, auch Call genannt, von dem Konferenzserver aufgebaut wird. Die Beobachtung des Konferenzraums als Ankerpunkt für die Applikation kann mittels CSTA (Computer Supported Telecommunications Applications) erfolgen. CSTA ist eine von der ECMA (European Computer Manufacturers Association) standardisierte Protokollspezifikation, die für den Datenverkehr zwischen einer Telefonanlage und Computerprogrammen verwendet wird. Das CSTA-Protokoll definiert lediglich die zu übertragenden Daten, nicht jedoch die Transportschicht. Zur Kodierung der Datenströme werden Basic Encoding Rules (CSTA Phase I, II und III), sowie XML Encoding Rules (CSTA Phase III) verwendet. Das CSTA-Protokoll kann über verschiedene Medien, beispielsweise seriell, ISDN oder TCP-IP, transportiert werden. Das Verbinden der Kommunikationsendgeräte der Teilnehmer der Konferenz auf den Konferenzraum kann mittels Authentifikation kontrolliert werden, so dass nur Kommunikationsendgeräte berechtigter Teilnehmer in die Konferenz eingebunden werden. Nachdem alle Endgeräte der Teilnehmer der Konferenz auf den Konferenzraum geschaltet sind bzw. auf den Konferenzraum verbunden sind, kann das neue Mehrfachgespräch mit dem Konferenzraum als Ankerpunkt für die Applikation und als Master der Konferenz von der Applikation gesteuert werden.

Da ein bestehendes Mehrfachgespräch zur Einbindung in eine applikationsgesteuerte Konferenz beendet werden muss, bevor von dem Konferenzserver die Kommunikationsverbindungen zu den Endgeräten der Teilnehmer nacheinander aufgebaut werden, kann das bestehende Mehrfachgespräch nur unter Inkaufnahme einer für die Teilnehmer dieses Gesprächs merklichen Unterbrechung in eine applikationsgesteuerte Konferenz eingebunden oder in eine solche überführt werden. Es ist daher bisher nicht möglich, ein Gespräch zwischen zwei Teilnehmern oder eine Systemkonferenz, in deren Rahmen ein Mehrfachgespräch geführt wird, in eine applikationsgesteuerte Konferenz einzubinden oder die Systemkonferenz in eine applikationsgesteuerte Konferenz zu überführen, ohne dass für die Teilnehmer des Mehrfachgesprächs eine wahrnehmbare Unterbrechung desselben eintritt. Da lediglich ein einzelnes Endgerät eines Teilnehmers für den Teilnehmer zügig auf einen Konferenzserver geschaltet werden kann, ist es beispielsweise auch nicht möglich, ein Gespräch zwischen zwei Teilnehmern mit einem anderen Gespräch zwischen zwei Teilnehmern zu einer Konferenz mit vier Teilnehmern für die Teilnehmer der Konferenz ohne wahrnehmbare Unterbrechung zu verbinden. Voraussetzung für eine Einbindung oder Überführung eines Mehrfachgesprächs in eine applikationsgesteuerte Konferenz, die für die Teilnehmer des Mehrfachgesprächs ohne merkliche Unterbrechung erfolgt, ist eine verringerte Dauer der Unterbrechung des Mehrfachgesprächs, die durch eine erfolgende Übertragung einer Steuerung des Mehrfachgesprächs auf die Applikation auftritt. Auf diese Weise könnte die zeitintensive Überführung eines bestehenden Mehrfachgesprächs in eine applikationsgesteuerte Konferenz beschleunigt werden. Der Übergang von einer Systemkonferenz zu einer applikationsgesteuerten Konferenz ist in der Praxis von hoher Bedeutung, weil applikationsgesteuerten Konferenzen und Systemkonferenzen unterschiedliche Bereiche der zur Verfügung stehenden Konferenzkanäle zugeordnet sein können und dem Konferenzleiter, auch Konferenzcontroller genannt, unterschiedliche Fähigkeiten zur Steuerung eines Gesprächs zur Verfügung stehen, wenn der Konferenzleiter die Masterrolle der Konferenz wahrnimmt.

In EP 1924051 A1 ist ein relationaler Rahmen für eine Nicht-Echtzeit Audio/Video Kollaboration beschrieben, bei dem ein web-basierter zeitunabhängiger Konferenzbetrieb für Multimedia-Kollaborationen über mehrere Zeitzonen bereitgestellt wird. Eine Konferenz wird eingeleitet und ihr wird eine Identifikationsnummer zugeordnet. Eine Konferenzsitzung wird initiiert und eine Session-ID wird der Konferenzsitzung zugeordnet, wobei die Identifikationsnummer und die Session-ID eine Konferenzsitzung eindeutig identifizieren. Zudem sind die Teilnehmer berechtigt, der Konferenzsitzung jederzeit beizutreten und Maßnahmen im Zusammenhang mit der Konferenzsitzung vorzunehmen wie das Erzeugen von Sub-Konferenzen.

Die US 2008/0159490 A1 befasst sich mit der Aufnahme von externen Benutzern in eine bestehende Konferenzschaltung. Dazu wird ein Konferenzsystem beschrieben, dass den Teilnehmern erlaubt Richtlinien zum Umgang mit eingehenden Anrufen externer Benutzer in einem Konferenzserver zu speichern.

Die US 2011/0282962 A1 offenbart den Austausch strukturierter Display-Informationen in einer Kollaborationssitzung, bei der ein als Master ausgewähltes (definiertes) Endgerät Display-Daten in strukturierter Form an Slave-Geräte sendet, sodass alle Bildschirme den gleichen Inhalt anzeigen.

Aufgabe der Erfindung ist es daher, die Dauer einer Unterbrechung eines Mehrfachgesprächs bei der Übertragung einer Steuerung des Mehrfachgesprächs auf eine Applikation zur Steuerung einer Konferenz zu verringern.

Zur Lösung dieser Aufgabe wird ein Verfahren zur Übertragung einer Steuerung eines bestehenden Mehrfachgesprächs auf eine Applikation zur Steuerung einer Konferenz nach Anspruch 1, ein Computerprogrammprodukt nach Anspruch 12 zum Ausführen eines solchen Verfahrens und ein Applikationsserver nach Anspruch 13, auf dem das Computerprogrammprodukt nach Anspruch 12 installiert ist, angegeben, mit denen es möglich ist, eine bestehende

Systemkonferenz in eine applikationsgesteuerte Konferenz einzubinden oder die bestehende Systemkonferenz in die applikationsgesteuerte Konferenz zu überführen, wobei die Dauer der Unterbrechung des Mehrfachgesprächs derart verringert ist, dass die Einbindung oder Überführung aus Sicht der Teilnehmer der Systemkonferenz unterbrechungsfrei oder fast unterbrechungsfrei erfolgt.

Gemäß dem erfindungsgemäßen Verfahren zur Übertragung einer Steuerung eines bestehenden Mehrfachgesprächs, bei dem mindestens zwei Kommunikationsendgeräte durch eine Datenverbindung miteinander verbunden sind, auf eine Applikation zur Steuerung einer Konferenz, erfolgt ein Einrichten eines virtuellen Konferenzraums, der einen Ankerpunkt für die Applikation bilden und ein virtueller Teilnehmer der Konferenz sein kann, ein Schalten des Konferenzraums in die bestehende Datenverbindung, und ein Zuweisen einer Masterrolle zu dem Konferenzraum, wobei eine von der Applikation durchgeführte Signalisierung das Schalten des Konferenzraums in die bestehende Datenverbindung und das Zuweisen der Masterrolle zu dem Konferenzraum bewirkt. Das Mehrfachgespräch und die Applikation können auf Systemebene innerhalb einer Einheit oder in unterschiedlichen Einheiten angeordnet sein. Das Einrichten des Konferenzraums kann ein Verbinden der Applikation mit dem Konferenzraum umfassen. Alternativ oder zusätzlich kann der Konferenzraum durch die Applikation eingerichtet werden. Durch die von der Applikation durchgeführte Signalisierung des Schaltens des Konferenzraums in die Datenverbindung und das Zuweisen der Masterrolle zu dem Konferenzraum entfällt die bisher umständliche und zeitintensive manuelle Beendigung des Mehrfachgesprächs und der Aufbau eines neuen Mehrfachgesprächs mit den Teilnehmern des beendeten Mehrfachgesprächs durch die Applikation zur Steuerung einer Konferenz. Daher wird durch das erfindungsgemäße Verfahren die Übertragung der Steuerung des Mehrfachgesprächs auf die Applikation vereinfacht. Da das manuelle Beenden des Mehrfachgesprächs entfällt und die Steuerung des Mehrfachgesprächs automatisch durch die Signalisierung auf die Applikation übertragen wird, erfolgt das Übertragen der Steuerung des Mehrfachgesprächs auf die Applikation so schnell, dass diese Übertragung für die Teilnehmer des Mehrfachgesprächs unterbrechungsfrei oder fast unterbrechungsfrei erfolgt, wodurch die der Erfindung zugrundeliegende Aufgabe gelöst wird. Sofern es sich bei dem Mehrfachgespräch um eine Systemkonferenz handelt, wird durch Ausführung des erfindungsgemäßen Verfahrens diese Systemkonferenz mit gegenüber dem Stand der Technik verringerter Unterbrechungsdauer in eine applikationsgesteuerte Konferenz überführt. Nach Überführung der Systemkonferenz in eine applikationsgesteuerte Konferenz können mittels des erfindungsgemäßen Verfahrens weitere potentielle Teilnehmer über die Applikation in die bestehende applikationsgesteuerte Konferenz eingebunden werden. Auf ähnliche Weise kann durch Ausführung des erfindungsgemäßen Verfahrens ein Mehrfachgespräch zwischen lediglich zwei Teilnehmern, auch 2-er Gespräch genannt, in ein applikationsgesteuertes Gespräch überführt werden, um nachfolgend potentielle weitere Teilnehmer in das applikationsgesteuerte Gespräch einzubinden. Weiter erlaubt das erfindungsgemäße Verfahren eine für die Teilnehmer einer applikationsgesteuerten Konferenz unterbrechungsfreie oder fast unterbrechungsfreie Einbindung oder Überführung in eine weitere applikationsgesteuerte Konferenz. Unter einer für die Teilnehmer des Mehrfachgesprächs unterbrechungsfreien oder fast unterbrechungsfreien Übertragung der Steuerung des Mehrfachgesprächs auf die Applikation wird eine Übertragung der Steuerung des Mehrfachgesprächs verstanden, die in weniger als einer Sekunde erfolgt. Obgleich eine Unterbrechung der Steuerung des Mehrfachgesprächs aufgrund der Übertragung dieser Steuerung auf die Applikation technisch gegeben ist, ist bei einer Unterbrechung von weniger als einer Sekunde für die Übertragung der Steuerung des Mehrfachgesprächs für die Teilnehmer des Mehrfachgesprächs diese technische Unterbrechung nicht oder kaum wahrnehmbar.

Das Schalten des Konferenzraums in die bestehende Datenverbindung wird auch als Konferieren bezeichnet. Die Signalisierung des Schaltens des Konferenzraums in die Datenverbindung und des Zuweisens der Masterrolle zu dem Konferenzraum kann gleichzeitig erfolgen, wodurch die Unterbrechung des Mehrfachgesprächs minimiert wird. Bei gleichzeitiger Schaltung des Konferenzraums in die Datenverbindung und Zuweisung der Masterrolle zu dem Konferenzraum erfolgt die Übertragung der Steuerung des Mehrfachgesprächs in signaltechnischer Hinsicht einschrittig, weil das Einrichten des Konferenzraums keine Unterbrechung des Mehrfachgesprächs bewirkt. Der Konferenzraum kann einen Ankerpunkt für die Applikation bilden, wie dies beispielsweise im technischen Bericht ECMA TR/82 2nd edition, June 2009 aufgeführt ist. Die Applikation kann sich innerhalb des Konferenzsystems befinden oder eine abgesetzte (logische) Einheit bilden. Durch die von der Applikation durchgeführte Signalisierung des Schaltens des Konferenzraums in die Datenverbindung und das Zuweisen der Masterrolle zu dem Konferenzraum erfolgt die Einbindung des Konferenzraums in das bestehende Mehrfachgespräch mit geringer Unterbrechungsdauer bei voller Funktionalität des Konferenzraums als Master der Konferenz. Vorteilhaft besteht das Mehrfachgespräch derart, dass mindestens drei Kommunikationsendgeräte miteinander verbunden sind. Bei einem solchen Mehrfachgespräch kann eine Konferenz, beispielsweise eine Systemkonferenz, in eine applikationsgesteuerte Konferenz überführt oder eingebunden werden. Nach Einbindung oder Überführung der Systemkonferenz in die applikationsgesteuerte Konferenz stehen dem Konferenzleiter der bisherigen Systemkonferenz die Vorteile eines Konferenzservers zur Verfügung bei gleichzeitiger Möglichkeit das bestehende Mehrfachgespräch durch die Applikation um weitere Teilnehmer der Konferenz zu erweitern. Gegenüber einer Systemkonferenz bietet die applikationsgesteuerte Konferenz die Möglichkeit, die maximale Anzahl der Teilnehmer des Mehrfachgespräches zu erhöhen.

In einer Ausführungsform erfolgt das Zuweisen der Masterrolle zu dem Konferenzraum durch ein Übertragen einer Masterrolle eines Masters des Mehrfachgesprächs von einem Kommunikationsendgerät an den Konferenzraum. Durch Übertragen der Masterrolle des Masters des Mehrfachgesprächs von einem Kommunikationsendgerät, das bei dem Mehrfachgespräch verwendet wird, an den Konferenzraum kann eine einfache und schnelle Übertragung der Steuerung des Mehrfachgesprächs auf die Applikation erreicht werden. Ein Übertragen der Masterrolle des Masters des Mehrfachgesprächs zur Zuweisung der Masterrolle zu dem Konferenzraum kann bei einem Mehrfachgespräch mit lediglich zwei Kommunikationsendgeräten jeweils eines Teilnehmers entfallen, da bei einem 2-er Gespräch eine Masterrolle nicht von einem Kommunikationsendgerät eines Teilnehmers des Mehrfachgesprächs wahrgenommen werden muss.

In der Ausführungsform, bei der das Mehrfachgespräch im Rahmen einer Systemkonferenz geführt wird, ergibt sich nach den obigen Ausführungen der Vorteil, dass die Steuerung des Mehrfachgesprächs in Form einer manuellen Führung dieses Gesprächs an die Applikation übergeben wird und auf diese Weise durch die Applikation die Möglichkeit geschaffen wird, weitere potentielle Teilnehmer in das bestehende Mehrfachgespräch aufzunehmen und/oder die maximale Anzahl der Teilnehmer des Mehrfachgesprächs zu erhöhen. Diese Vorteile ergeben sich insbesondere dann, wenn gemäß einer weiteren Ausführungsform die Systemkonferenz in eine applikationsgesteuerte Konferenz eingebunden oder überführt wird.

Vorteilhaft werden systemgesteuerte Konferenzkanäle der Systemkonferenz in applikationsgesteuerte Kanäle der Applikation zur Steuerung einer Konferenz umgesetzt. Sofern systembedingt eine Aufteilung der zur Verfügung stehenden Konferenzkanäle in systemgesteuerte und applikationsgesteuerte Konferenzen besteht, wie dies beispielsweise bei OpenScape Office der Fall ist, wird durch ein Umsetzen der systemgesteuerten Konferenzkanäle in applikationsgesteuerte Konferenzkanäle eine Balance zwischen beiden Konferenztypen und Konferenzkanaltypen aufrechterhalten.

Mit Vorteil wird vor dem Schalten des Konferenzraums in die bestehende Datenverbindung der Konferenzraum mittels der Serviceoperation CorNet-NQ bzw. QSIG Single Step Call Transfer an das Kommunikationsendgerät des Masters des Mehrfachgesprächs übergeben. Die Übergabe des Konferenzraums an das Kommunikationsendgerät des Masters des Mehrfachgesprächs bzw. der Transfer des Konferenzraums auf das Kommunikationsendgerät des Masters des Mehrfachgesprächs erfolgt bei Verwendung dieser Serviceoperation ressourcenschonend und schnell.

In einer weiteren Ausführungsform erfolgt vor dem Schalten des Konferenzraums in die bestehende Datenverbindung ein Anklopfen des Konferenzraums bei dem Kommunikationsendgerät des Masters des Mehrfachgesprächs in weniger als einer Sekunde. Ein Anklopfen erfolgt insbesondere nach einem Direktruf des Konferenzraums bei dem Kommunikationsendgerät des Masters des Mehrfachgesprächs oder nach Übergabe des Konferenzraums an das Kommunikationsendgerät des Masters des Mehrfachgesprächs. Bekannt sind Anklopfvorgänge, die nach fünf Sekunden erfolgen. Durch ein Anklopfen, das in weniger als einer Sekunde erfolgt, wird eine Unterbrechung des Mehrfachgesprächs während der Übertragung der Steuerung des Mehrfachgesprächs auf die Applikation minimiert. Die Unterbrechung des Mehrfachgesprächs ist in diesem Fall so gering, dass die Unterbrechung von Teilnehmern des Mehrfachgesprächs nicht oder kaum wahrgenommen wird. Die Serviceoperation CorNet-NQ bzw. QSIG Single Step Call Transfer ist eine CorNet-NQ bzw. QSIG Facility Operation. Die Nutzung anderer Operationen oder Services mit dem gleichen Effekt der Übergabe des Konferenzraums an das Kommunikationsendgerät des Masters des Mehrfachgesprächs ist möglich.

Eine weitere Ausführungsform umfasst das Schalten des Konferenzraums in die bestehende Datenverbindung mittels der Serviceoperation CSTA Service Conference Call oder mittels der Serviceoperation CSTA Service Join Call. CSTA Services können beispielsweise der ECMA Richtlinie 269, 8th edition, June 2009 entnommen werden. Beispielsweise kann nach einem erfolgten Anklopfen des Konferenzraums bei dem Kommunikationsendgerät des Masters des Mehrfachgesprächs der Konferenzraum mittels CSTA Service Conference Call in die bestehende Datenverbindung geschaltet werden. Mittels CSTA Service Join Call kann der Konferenzraum direkt in die bestehende Datenverbindung geschaltet werden, wobei zusammen mit diesem Schalten die Masterrolle dem Konferenzraum zugewiesen werden kann. Das direkte Schalten des Konferenzraums in die bestehende Datenverbindung bietet sich insbesondere in vernetzten Systemen an, bei denen der Konferenzraum aus einem Netzwerk heraus eingebunden wird. Das direkte Schalten des Konferenzraums in die bestehende Verbindung erfolgt in nicht dokumentierter Anwendung des CSTA Service Join Call und stellt somit eine Erweiterung der CSTA Services gemäß Richtlinie ECMA-269 dar.

Vorteilhafterweise werden nach Zuweisen der Masterrolle an den Konferenzraum mittels der Applikation zur Steuerung einer Konferenz weitere Kommunikationsendgeräte knotenübergreifend in das Mehrfachgespräch aufgenommen. Bei applikationsgesteuerten Konferenzen hat der Konferenzraum nach Zuweisung der Masterrolle bzw. Übernahme der Masterrolle von dem Kommunikationsendgerät des Masters des Mehrfachgesprächs im Gegensatz zu einer Systemkonferenz die Möglichkeit, mittels der Applikation zur Steuerung einer Konferenz weitere Teilnehmer knotenübergreifend in das bestehende Mehrfachgespräch aufzunehmen. Die Aufnahme oder Einbindung weiterer Teilnehmer in das bestehende Gespräch kann über einen lokalen oder einen Remote Konferenzpunkt erfolgen. Sofern das Mehrfachgespräch im Rahmen einer Systemkonferenz geführt wurde, ist aus der Systemkonferenz für die Teilnehmer der Systemkonferenz unterbrechungsfrei oder fast unterbrechungsfrei eine benutzerfreundliche applikationsgesteuerte oder applikationsgeführte Konferenz geworden.

In einer anderen Ausführungsform wird der Konferenzraum in einem Ursprungsknoten eines Netzwerks in die bestehende Datenverbindung in einem Zielknoten des Netzwerks geschaltet und ein Netzwerk-Trunk in dem Zielknoten nimmt als Proxy die Masterrolle wahr. Das Netzwerk umfasst mithin einen Ursprungsknoten, in dem der Konferenzraum angeordnet ist und einen Zielknoten in dem die Datenverbindung angeordnet ist. Typischerweise ist im Ursprungsknoten neben dem Konferenzraum zusätzlich die Applikation angeordnet. Zudem sind typischerweise neben der Datenverbindung die durch die Datenverbindung verbundenen Kommunikationsendgeräte in dem Zielknoten des Netzwerks angeordnet. Sofern nun im Zielknoten ein Netzwerk-Trunk angeordnet ist, der mit den Kommunikationsendgeräten verbunden ist, die über die Datenverbindung miteinander verbunden sind, kann der Netzwerk-Trunk als Proxy die Masterrolle wahrnehmen, die nach Übertragung der Steuerung des Mehrfachgesprächs an die Applikation an den Konferenzraum im Ursprungsknoten zugewiesen wurde. Der Netzwerk-Trunk fungiert daher als Vermittler, der auf der einen Seite Anfragen des Konferenzraums entgegennimmt, um dann über seine eigene Adresse als Kommunikationsstelle in dem Netzwerk eine Verbindung zu den Kommunikationsendgeräten, die im Mehrfachgespräch verwendet werden, zu nutzen. Durch den Einsatz des Netzwerk-Trunks als Proxy bleibt die Adresse des Konferenzraums den Kommunikationsendgeräten verborgen. Auf der anderen Seite realisiert der Netzwerk-Trunk bei einem Einsatz unterschiedlicher Netzwerke eine Verbindung zwischen dem Konferenzraum und den Kommunikationsendgeräten auch dann, wenn die (Netzwerk-)Adressen der Kommunikationsendgeräte einerseits und der (Netzwerk-)Adresse des Konferenzraums andererseits zueinander inkompatibel sind und eine direkte Datenverbindung nicht möglich wäre. Da der Netzwerk-Trunk als Proxy lediglich eine Vermittlerrolle zwischen dem Konferenzraum und den Kommunikationsendgeräten wahrnimmt, verbleibt die Masterrolle im Konferenzraum.

Eine vorteilhafte Ausführungsform betrifft das Absetzen einer Serviceoperation zum Schalten des Konferenzraums in einem Ursprungsknoten in die bestehende Datenverbindung in einem Zielknoten über ein single-system-image auf den Ursprungsknoten. Beispielsweise kann die Serviceoperation CSTA Service Join Call zum Schalten des Konferenzraums in die bestehende Datenverbindung über das single-system-image mit entsprechender Middleware auf den Ursprungsknoten, in dem der Konferenzraum angeordnet ist, abgesetzt werden. Bei einem single-system-image werden mehrere Systeme, beispielsweise mehrere Knoten, die jeweils ein eigenständiges System bilden, als ein einziges System nach außen dargestellt. Die Applikation muss daher nicht wissen, in welchem Knoten oder System ein Service bzw. eine Serviceoperation abgesetzt werden muss. Die Middleware stellt eine Schnittstelle zu allen Systemen zur Verfügung, wobei die Applikationen zum Betrieb der Systeme sich zentral an der Middleware anmelden. Die über den CSTA Service Join Call übermittelte Steuerinformation kann dann beispielsweise mit einer geeigneten CorNet-NQ Facility Operation an den Zielknoten, in dem die bestehende Datenverbindung angeordnet ist, weitergeleitet werden. Auf diese Weise kann eine Vielfachknoten-Steuerung einer Konferenz, auch Multinode-Steuerung genannt, aufgebaut werden. Gemäß der vorherigen Ausführungsform kann dann im Zielknoten der Netzwerk-Trunk als Proxy die Rolle des Masters in dem lokalen bzw. abgesetzten Mehrfachgespräch, das im Rahmen einer Systemkonferenz geführt werden kann, übernehmen.

Vorteilhafterweise wird die Applikation zur Steuerung einer Konferenz als Konferenzserver ausgeführt. Gemäß der obigen Definition ist der Konferenzserver entweder in Form von Software als Applikation oder in Form von Hardware als Server ausgeführt. Beispielsweise kann die Applikation als Konferenzserver auf einem Linux-Server gemäß OpenScape Office LX ausgeführt sein.

Der bisherige Konferenzleiter des Mehrfachgesprächs kann nach Zuweisung der Masterrolle an den Konferenzraum die Konferenz nur noch über den Konferenzserver bedienen und nicht mehr über das Userinterface seines Endgerätes, wenn das Mehrfachgespräch im Rahmen einer Systemkonferenz geführt wurde.

Neben dem Verfahren zur Übertragung einer Steuerung eines bestehenden Mehrfachgesprächs auf eine Applikation zur Steuerung einer Konferenz betrifft die vorliegende Erfindung weiter ein Computerprogrammprodukt zum Ausführen eines solchen Verfahrens. Beispielsweise kann das Computerprogrammprodukt als Software vorliegen. Das Computerprogrammprodukt kann als binäre Daten, auf Floppy Disk, einer DVD, einer CD-ROM oder auf einer Speicherkarte gespeichert vorliegen. Weiter kann das Computerprogrammprodukt als ausgedruckter Source Code vorliegen.

Weiter umfasst die Erfindung einen Applikationsserver, auf dem das Computerprogrammprodukt installiert ist. Der Applikationsserver kann als Desktop-PC, als Laptop, als Server in einem 19-Zoll-Gehäuse oder in anderer Hardwareform vorliegen.

Durch das Schalten des Konferenzraums in die bestehende Datenverbindung und das Zuweisen einer Masterrolle zu dem Konferenzraum wird der Konferenzraum in das bestehende Mehrfachgespräch eingebunden. Eine für die Teilnehmer des Mehrfachgesprächs unterbrechungsfreie oder fast unterbrechungsfrei Einbindung des Konferenzraums in das Mehrfachgespräch kann bei unterschiedlichen Konfigurationen, beispielsweise ein Knoten, mehrere Knoten oder mehrere Netzwerke erfolgen und ein- oder mehrstufig, beispielsweise über einen CTI-Link oder über ein Vernetzungsprotokoll, erfolgen. Eine gewählte Konfiguration kann hierbei mit einer einstufigen oder mehrstufigen Einbindung des Konferenzraums in das Mehrfachgespräch kombiniert werden. Wenn mehrere Serviceoperationen zur Einbindung des Konferenzraums in das Mehrfachgespräch verwendet werden, liegt eine systeminterne Aneinanderreihung mehrerer Serviceoperationen vor, wobei in diesem Fall die Einbindung mehrstufig oder mehrschrittig erfolgt. Falls lediglich eine Serviceoperation zur Einbindung des Konferenzraums in das Mehrfachgespräch verwendet wird, liegt eine einstufige oder einschrittige Einbindung des Konferenzraums in das Mehrfachgespräch vor. Sowohl einals auch mehrstufige Einbindungen des Konferenzraums in das Mehrfachgespräch können aus Sicht der Teilnehmer des Mehrfachgesprächs unterbrechungsfrei oder fast unterbrechungsfrei erfolgen. Beispielsweise kann bei Verwendung von CSTA Service Join Call der Konferenzraum einstufig in das Mehrfachgespräch eingebunden werden. Andererseits kann durch eine Verwendung von CorNet-NQ oder QSIG Single Step Call Transfer in Verbindung mit einem Anklopfen (Camp-On) und CSTA Service Conference Call der Konferenzraum mehrstufig in das Mehrfachgespräch eingebunden werden.

Weitere Ausführungsbeispiele sowie Vorteile der Erfindung werden nachfolgend anhand der Figuren erläutert. Zur besseren Anschaulichkeit wird in den Figuren auf eine maßstabs- oder proportionsgetreue Darstellung verzichtet. In den Figuren bezeichnen, sofern nicht anders angegeben, gleiche Bezugszeichen gleiche Teile mit gleicher Bedeutung. Es zeigen:

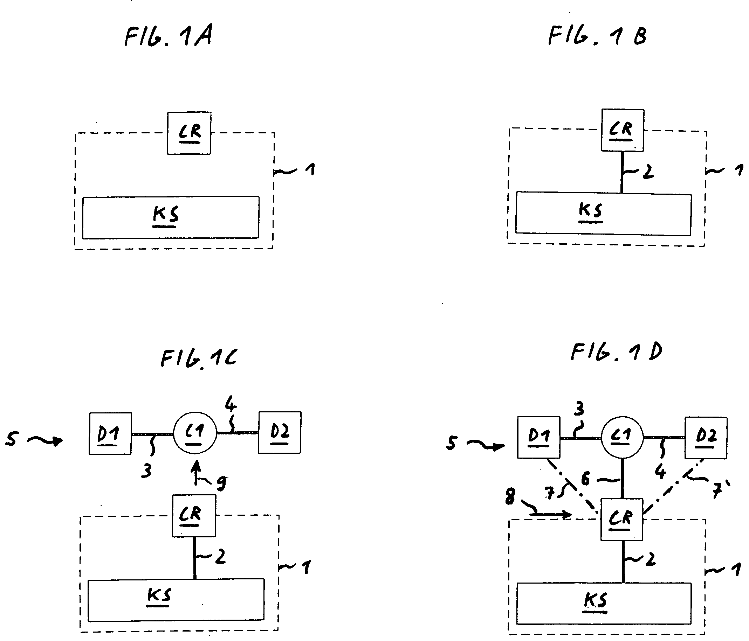

FIG. 1a bis FIG. 1d jeweils eine schematische Anordnung aus logischen Einheiten, die bei Durchführung des Verfahrens zur Übertragung einer Steuerung eines bestehenden Mehrfachgesprächs auf eine Applikation zur Steuerung einer Konferenz in einer ersten Ausführungsform durchlaufen werden, bei der ein Konferenzraum in ein Mehrfachgespräch mit zwei Teilnehmern eingebunden wird,

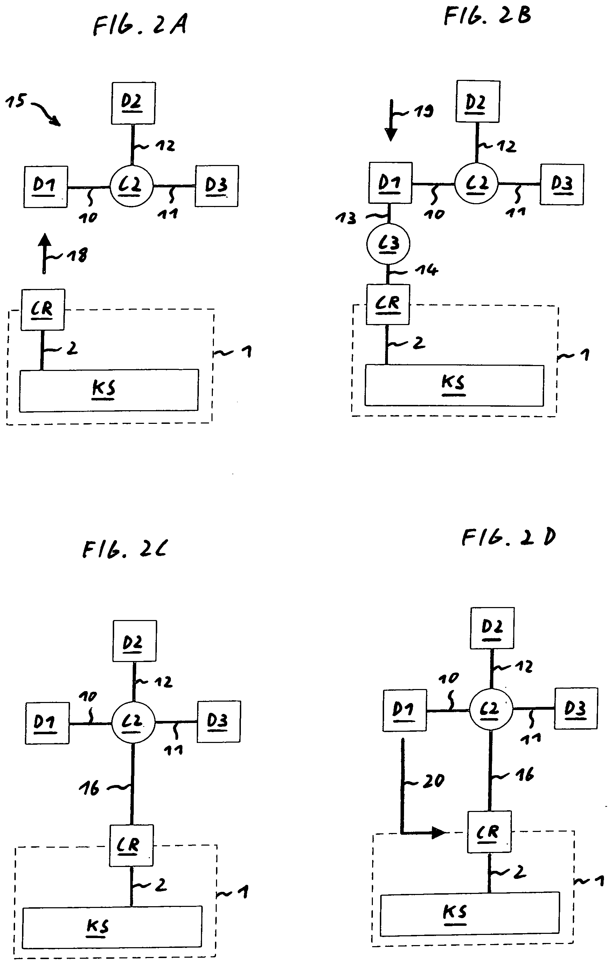

FIG. 2a bis 2d jeweils eine schematische Anordnung aus logischen Einheiten, bei Durchführen des Verfahrens zur Übertragung einer Steuerung eines bestehenden Mehrfachgesprächs auf eine Applikation zur Steuerung einer Konferenz in einer zweiten Ausführungsform, bei der ein Konferenzraum an ein Mehrfachgespräch mit drei Teilnehmern auf den Master des bestehenden Mehrfachgesprächs übertragen und danach in die bestehende Datenverbindung geschaltet wird,

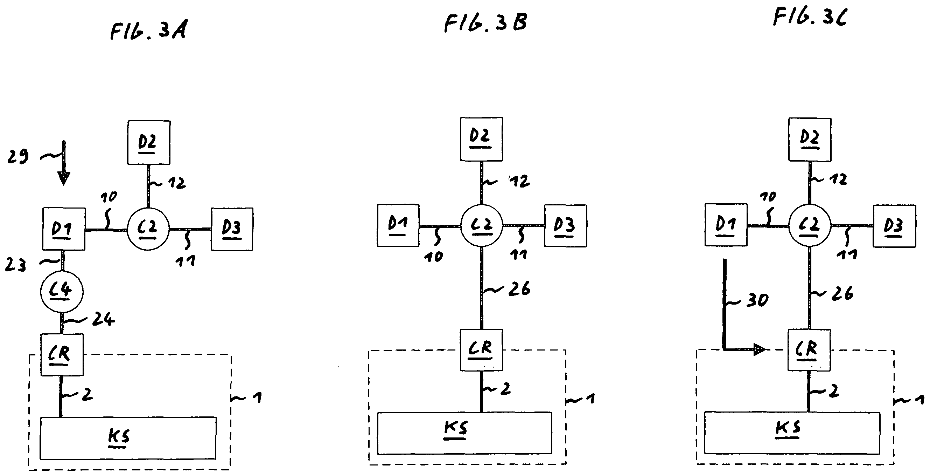

FIG. 3a bis 3c jeweils eine schematische Anordnung aus logischen Einheiten bei der Durchführung eines Verfahrens zur Übertragung einer Steuerung eines bestehenden Mehrfachgesprächs mit drei Teilnehmern auf eine Applikation zur Steuerung einer Konferenz in einer dritten Ausführungsform, bei der der Master des bestehenden Mehrfachgesprächs direkt von dem Konferenzraum gerufen wird,

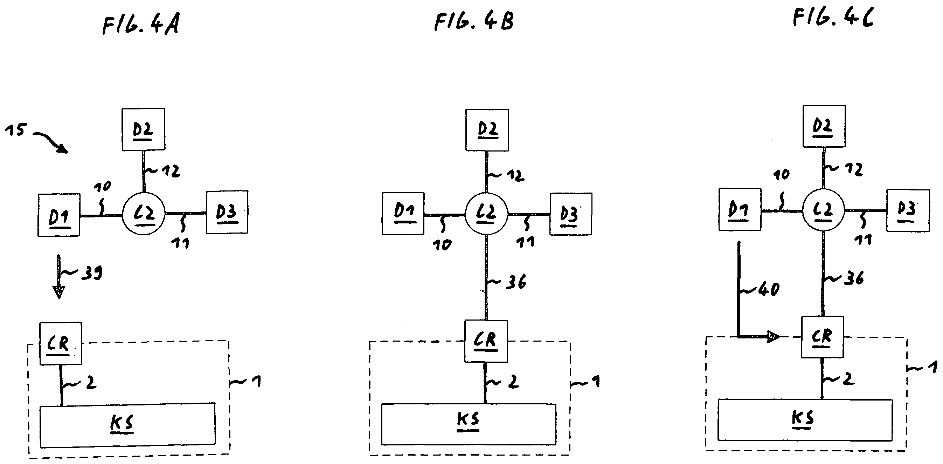

FIG. 4a bis 4c jeweils eine schematische Anordnung aus logischen Einheiten bei der Durchführung des erfindungsgemäßen Verfahrens zur Übertragung einer Steuerung eines bestehenden Mehrfachgesprächs auf eine Applikation zur Steuerung einer Konferenz in einer vierten Ausführungsform, bei der der Konferenzraum direkt vom Master des bestehenden Mehrfachgesprächs mit drei Teilnehmern gerufen wird,

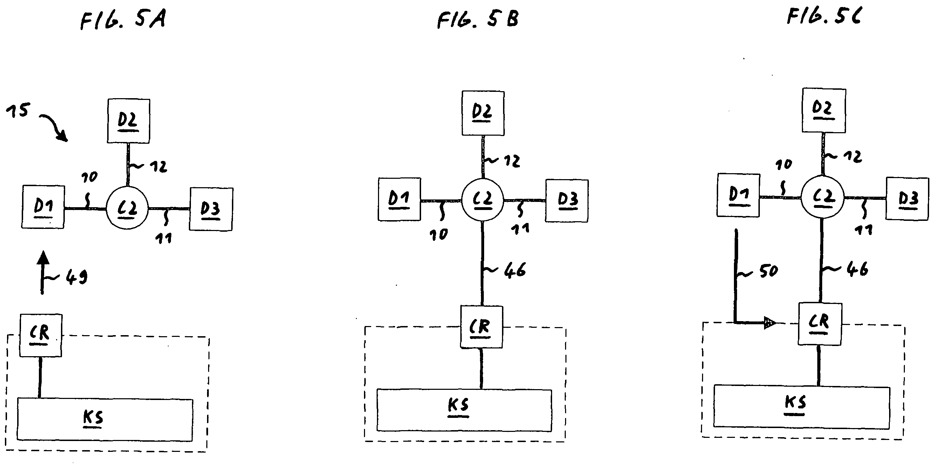

FIG. 5a bis 5c jeweils eine schematische Anordnung aus logischen Einheiten bei der Durchführung des Verfahrens zur Übertragung einer Steuerung eines bestehenden Mehrfachgesprächs mit drei Teilnehmern auf eine Applikation zur Steuerung einer Konferenz in einer fünften Ausführungsform, bei der sich der Konferenzraum direkt in die bestehende Datenverbindung schaltet,

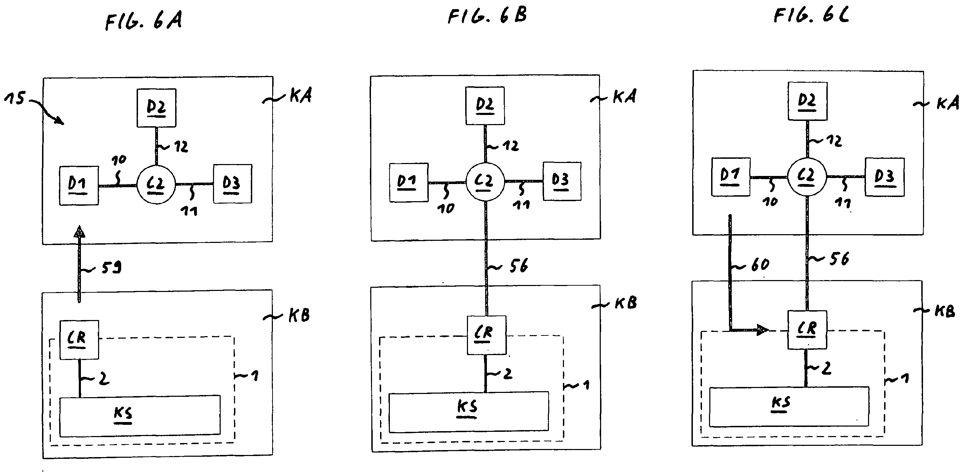

FIG. 6a bis 6c jeweils eine schematische Anordnung logischer Einheiten bei der Durchführung des erfindungsgemäßen Verfahrens in einer sechsten Ausführungsform, bei der sich der Konferenzraum direkt in die bestehende Datenverbindung entsprechend der fünften Ausführungsform schaltet, die in den FIG. 5a bis 5c dargestellt ist, wobei in der sechsten Ausführungsform die Einbindung des Konferenzraums in das bestehende Mehrfachgespräch vernetzt erfolgt,

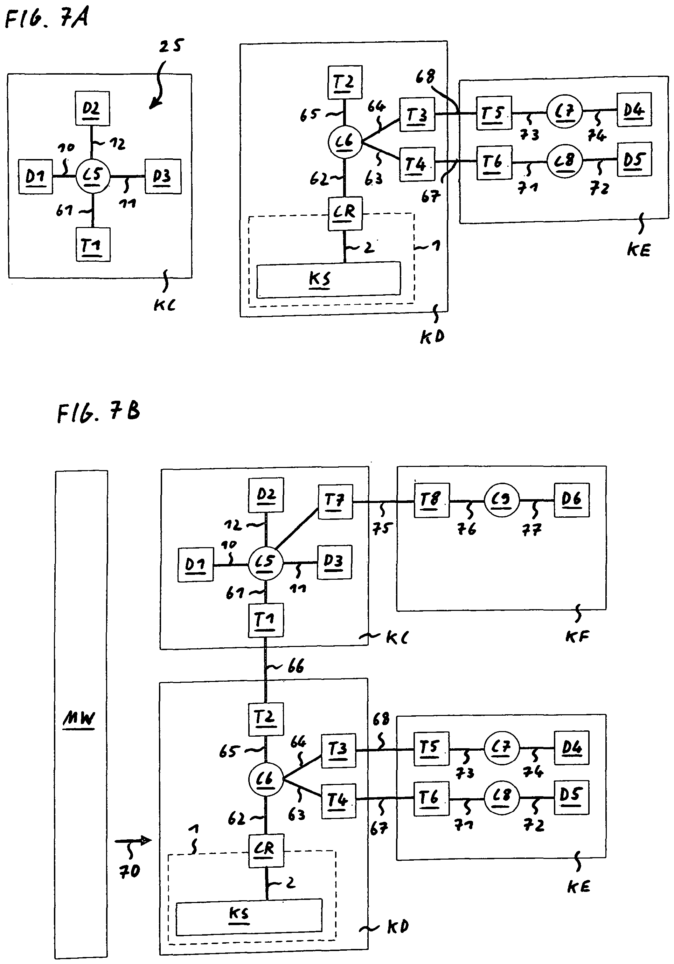

FIG. 7a und 7b jeweils eine schematische Anordnung aus logischen Einheiten bei der Durchführung des erfindungsgemäßen Verfahrens in einer siebten Ausführungsform, bei der gemäß der sechsten Ausführungsform, die in den FIG. 6a bis 6c dargestellt ist, sich der Konferenzraum direkt in die bestehende Datenverbindung schaltet, wobei nach dem Einbinden des Konferenzraums in das bestehende Mehrfachgespräch eine Multinode-Konferenz aufgebaut ist.

In FIG. 1a ist schematisch eine Anordnung aus einer Applikation zur Steuerung einer Konferenz KS und eines Konferenzraums CR (Conference Room) dargestellt, wobei die Applikation zur Steuerung einer Konferenz und der Konferenzraum in Form von Software in einem Konferenzserver 1 ausgeführt sind. Da der Konferenzraum CR als Bindeglied zwischen dem Konferenzserver und dem anzubindenden Mehrfachgespräch agiert, fungiert der Konferenzraum als logische Schnittstelle des Konferenzservers nach außen und ist daher nicht innerhalb des gestrichelten Rechtecks dargestellt, das den Konferenzserver darstellt, sondern am Rand des gestrichelten Rechtecks.

In FIG. 1b ist der Konferenzraum an oder mit der Applikation verbunden innerhalb des Konferenzservers 1. Durch die logische Verbindung 2 zwischen dem Konferenzraum CR und der Applikation KS ist es der Applikation KS möglich, ein an den Konferenzraum CR angebundenes Mehrfachgespräch zu steuern. Die logische Verbindung 2 erlaubt einen bidirektionalen Datenverkehr von Steuerdaten, beispielsweise Signalisierungsdaten, vom Konferenzraum CR in Richtung der Applikation KS und von der Applikation KS in Richtung des Konferenzraums CR. Die logische Verbindung 2 kann im Rahmen der Durchführung der Applikation KS aufgebaut werden oder nach Inbetriebnahme der Applikation KS in einem separaten Schritt erfolgen.

In FIG. 1c ist zusätzlich zu den logischen Einheiten des Konferenzraums CR und der Applikation KS ein Mehrfachgespräch mit zwei Teilnehmern dargestellt, wobei ein erster Teilnehmer das Mehrfachgespräch 5 mit einem Kommunikationsendgerät D1 und ein zweiter Teilnehmer das Mehrfachgespräch 5 mit einem Kommunikationsendgerät D2 führt. Als Kommunikationsendgerät D1, D2 kommt beispielsweise ein Mobiltelefon, ein Festnetztelefon, ein PC, ein PDA (Personal Digital Assistant), ein Tablet-PC oder jedes andere Kommunikationsmittel in Betracht, durch das die Teilnehmer des Mehrfachgesprächs Sprach- und/oder Bilddaten miteinander austauschen können, wobei sich die Teilnehmer des Mehrfachgesprächs derart an unterschiedlichen Orten aufhalten, dass eine unmittelbare Kommunikation der Teilnehmer untereinander nicht möglich ist. Das Kommunikationsendgerät D1 ist über ein Verbindungsteilstück 3 und ein weiteres Verbindungsteilstück 4 mit dem Kommunikationsendgerät D2 verbunden, wobei die Kommunikationsteilstücke 3 und 4 eine logische Verbindung C1 zwischen dem Kommunikationsendgerät D1 und dem Kommunikationsendgerät D2 bildet. In FIG. 1c ist der Verfahrensschritt des Schaltens des Konferenzraums in die bestehende Datenverbindung C1 als Pfeil 9 vom Konferenzraum CR in Richtung der bestehenden Datenverbindung C1 dargestellt.

In FIG. 1d ist der Konferenzraum CR durch das Verbindungsteilstück 6 in die bestehende Datenverbindung C1 zwischen D1 und D2 geschaltet. Daher umfasst die bestehende Datenverbindung C1 nunmehr die Kommunikationsendgeräte D1 und D2 sowie den Konferenzraum CR als virtuellen Teilnehmer, wobei die Datenverbindung C1 nunmehr die Datenverbindungsteilstücke 3, 4, 6 umfasst. Da im Gegensatz zu den Kommunikationsendgeräten D1, D2, dem Konferenzraum CR kein Teilnehmer eines Mehrfachgesprächs bzw. einer Konferenz zugeordnet ist, der mit einem weiteren Teilnehmer Sprach- und/oder Bilddaten austauscht, sondern der Konferenzraum CR lediglich als virtueller Teilnehmer zur Steuerung des Mehrfachgesprächs bzw. der Konferenz herangezogen wird, wird der Konferenzraum nicht als Endgerät eines Teilnehmers, sondern als virtueller Teilnehmer des Mehrfachgesprächs bzw. der Konferenz bezeichnet.

Alternativ zu dem Verbindungsteilstück 6, mit dem der Konferenzraum CR direkt in die bestehende Datenverbindung C1, umfassend die Verbindungsteilstücke 3, 4, geschaltet wird, ist es alternativ möglich, anstelle des Verbindungsteilstücks 6 vom Konferenzraum CR eine Verbindung 7 zu dem Kommunikationsendgerät D1 und von dem Konferenzraum CR eine Verbindung 7' zu dem Kommunikationsendgerät D2 derart aufzubauen, dass der Konferenzraum die bestehende Datenverbindung C1 zur Verbindung mit den Kommunikationsendgeräten D1, D2 benötigt. Insofern wird unter einem Schalten des Konferenzraums in die bestehende Datenverbindung unter anderem ein separates Verbinden des Konferenzraums mit jedem der an dem Mehrfachgespräch beteiligten Kommunikationsendgeräte D1, D2 verstanden, wobei nach Aufbau der Verbindung oder der Verbindungen des Konferenzraums zu den Kommunikationsendgeräten D1, D2 über die Verbindung oder die Verbindungen Signalisierungsdaten zu dem Kommunikationsendgeräten D1, D2 übertragen werden können.

In FIG. 1d ist durch einen Pfeil 8, schematisch der Verfahrensschritt dargestellt, durch den dem Konferenzraum CR eine Masterrolle zugewiesen wird. Da bei dem Mehrfachgespräch mittels der Kommunikationsendgeräte D1, D2, von denen jeweils eines von jedem der beiden Teilnehmer des Mehrfachgesprächs zur Führung des Mehrfachgesprächs 5 verwendet wird, eine Masterrolle nicht gegeben ist, die zur Führung des Mehrfachgesprächs 5 erforderlich wäre, kann keine Masterrolle des bestehenden Mehrfachgesprächs bei einem 2-er Gespräch an den Konferenzraum übergeben werden. Daher wird dem Konferenzraum CR nach dem Schalten des Konferenzraums CR in die bestehende Datenverbindung C1 eine Masterrolle zugewiesen. Alternativ kann zeitgleich mit dem Schalten des Konferenzraums CR in die bestehende Datenverbindung C1 die Masterrolle dem Konferenzraum zugewiesen werden. Ein solches einschrittiges oder einstufiges Einbinden des Konferenzraums in das bestehende 2-er Gespräch ist beispielsweise mit der Serviceoperation CSTA Service Join Call möglich. In diesem einschrittigen Fall einer Einbindung des Konferenzraums CR in die bestehende Datenverbindung C1 erfolgt die Übertragung der Steuerung des bestehenden Mehrfachgesprächs 5 an die Applikation KS aus Sicht der Teilnehmer des bestehenden Mehrfachgesprächs unterbrechungsfrei oder fast unterbrechungsfrei, d. h. die Übertragung der Steuerung des Mehrfachgesprächs 5 auf die Applikation KS ist für die Teilnehmer des Mehrfachgesprächs hinsichtlich einer Unterbrechung dieses Gesprächs nicht oder kaum wahrnehmbar. Alternativ kann das Schalten des Konferenzraums CR in die bestehende Datenverbindung C1 und das Zuweisen der Masterrolle zu dem Konferenzraum CR mittels der Serviceoperation CSTA Service Conference Call erfolgen. Da gemäß der schematischen Anordnung in FIG. 1d nach dem Schalten des Konferenzraums CR in die bestehende Datenverbindung C1 neben den beiden Teilnehmern des bestehenden Mehrfachgesprächs der Konferenzraum CR als weiterer (virtueller) Teilnehmer in das Mehrfachgespräch eingebunden ist, besteht nunmehr eine Konferenz, die den Konferenzraum und die Teilnehmer des Mehrfachgesprächs, die die Kommunikationsendgeräte D1, D2, verwenden, wobei diese Konferenz von der Applikation KS gesteuert wird.

In FIG. 2a ist schematisch eine Anordnung aus einem bestehenden Mehrfachgespräch mit drei Teilnehmern dargestellt, die mittels der Kommunikationsendgeräte D1, D2, D3 die über Verbindungsteilstücke 10, 12, 11 miteinander über die bestehende Datenverbindung C2 verbunden sind. Der Konferenzserver 1, bei dem die Applikation KS über die Verbindung 2 mit dem Konferenzraum CR verbunden ist, wird an das Mehrfachgespräch 15 angebunden, indem der Konferenzraum CR auf den Master des bestehenden Mehrfachgesprächs 15, der das Kommunikationsendgerät D1 bedient, transferiert wird oder an diesen Master übergeben wird. Dieser Vorgang ist in FIG. 2a mit dem Pfeil 18 schematisch dargestellt.

In FIG. 2b ist der Konferenzraum CR an das Kommunikationsendgerät D1, das als Master des Mehrfachgesprächs 19 fungiert, über die logische Verbindung C3, umfassend die Verbindungsteilstücke 13, 14, verbunden. Die Übergabe bzw. der Transfer des Konferenzraums CR an den Master des bestehenden Mehrfachgesprächs 15 in Gestalt des Kommunikationsendgerätes D1 erfolgt beispielsweise durch die ressourcenschonende Serviceoperation CorNet-NQ oder QSIG Single Step Call Transfer. Die CorNet-NQ oder QSIG Facility Operation Single Step Call Transfer wird verwendet um ein Kommunikationsendgerät D1, D2, D3 auf den Konferenzraum CR zu vermitteln oder zu transferieren. Hierzu erfolgt ein sofortiges Anklopfen (Camp-On) des Konferenzraums CR bei dem Kommunikationsendgerät D1, dem die Masterrolle des bestehenden Mehrfachgesprächs 15 zugeordnet ist. Üblicherweise beginnt ein Anklopfen nach fünf Sekunden. Da bei einem Anklopfen mit einer Dauer von fünf Sekunden eine für die Teilnehmer des Mehrfachgesprächs 15 unterbrechungsfreie oder fast unterbrechungsfreie Übertragung der Steuerung des Mehrfachgesprächs 15 an die Applikation KS nicht möglich ist, erfolgt das Anklopfen des Konferenzraums CR bei dem Kommunikationsendgerät D1 des Masters des Mehrfachgesprächs 15 in weniger als einer Sekunde.

Nachdem der Konferenzraum CR auf das Kommunikationsendgerät D1 als Master des Mehrfachgesprächs 15 transferiert ist und eine bestehende Datenverbindung C3 zwischen dem Konferenzraum CR und dem Kommunikationsendgerät D1 eingerichtet ist, wird der Konferenzraum CR in die bestehende Datenverbindung C2 des Mehrfachgesprächs 15 geschaltet, wobei dieser Vorgang auch als "Konferieren" bezeichnet wird und in FIG. 2b schematisch als Pfeil 19 dargestellt ist. Das Schalten des Konferenzraums CR in die bestehende Datenverbindung C2 kann beispielsweise über die Serviceoperation CSTA Service Conference Call erfolgen.

Nach dem Schalten des Konferenzraums CR in die bestehende Datenverbindung C2 ist der Konferenzraum CR, wie in FIG. 2c dargestellt, über das Verbindungsteilstück 16 mit der bestehenden Datenverbindung C2 verbunden, die nunmehr die Verbindungsteilstücke 10, 11, 12, 16 umfasst.

In FIG. 2d schematisch durch den Pfeil 20 dargestellt, wird dem Konferenzraum CR die Masterrolle, die bisher über das Kommunikationsendgerät D1 wahrgenommen wurde, durch Übertragung der Masterrolle des Mehrfachgesprächs 15 zugewiesen. Nach der Zuweisung der Masterrolle zu dem Konferenzraum CR ist der Konferenzraum CR als virtueller Teilnehmer in das Mehrfachgespräch 15, das die Kommunikationsendgeräte D1, D2, D3 umfasst, eingebunden. Mithin umfasst das Mehrfachgespräch nach Anbindung des Konferenzraums vier Teilnehmer, nämlich die Teilnehmer der Endgeräte D1, D2, D3 und den Konferenzraum als virtuellen Teilnehmer. Mittels der Serviceoperation CSTA Service Conference Call kann einschrittig bzw. einstufig der Konferenzraum in das Mehrfachgespräch 15 durch Schalten des Konferenzraums in die bestehende Datenverbindung C2 und Zuweisen der Masterrolle des Endgerätes D1 zu dem Konferenzraum eingebunden werden. Daher werden die CSTA-Serviceoperationen, beispielsweise die Serviceoperation CSTA Service Conference Call zur Steuerung der Konferenz genutzt, beispielsweise zum Einleiten, Erweitern oder zum Auslösen, d. h. zum Beenden, von Kommunikationsverbindungen. Obwohl das Übertragen der Steuerung des Mehrfachgesprächs 15 auf die Applikation KS gemäß der zweiten Ausführungsform, die schematisch in FIG. 2a bis 2d dargestellt ist, mehrschrittig bzw. mehrstufig erfolgt, da der Transfer des Konferenzraums CR an das Endgerät D1 als Master des bestehenden Mehrfachgesprächs 15 einerseits und das Schalten des Konferenzraums in die bestehende Datenverbindung C2 und Zuweisen der Masterrolle auf den Konferenzraum andererseits in unterschiedlichen Schritten erfolgt, beispielsweise durch CorNet-NQ oder QSIG Single Step Call Transfer und CSTA Service Conference Call, kann die durch die Abfolge dieser Schritte eintretende Unterbrechung des Mehrfachgesprächs 15 für die Teilnehmer des Mehrfachgesprächs so gering sein, dass diese von den Teilnehmern des Mehrfachgesprächs nicht oder kaum wahrgenommen wird und daher für die Teilnehmer des Mehrfachgesprächs unterbrechungsfrei oder fast unterbrechungsfrei ist. Obwohl also eine systeminterne Aneinanderreihung mehrerer Dienste, beispielsweise CorNet-NQ oder QSIG Single Step Call Transfer und CSTA Conference Call im Rahmen der zweiten Ausführungsform gemäß FIG. 2a bis 2d erfolgt, ist die Abfolge dieser Dienste bzw. Serviceoperation aus Sicht der Teilnehmer des Mehrfachgesprächs unterbrechungsfrei oder fast unterbrechungsfrei. Die Verwendung von CSTA Service Conference Call zum Schalten des Konferenzraums CR in die bestehende Datenverbindung C2 und das Übertragen der Masterrolle auf den Konferenzraum stellt eine erweiterte Anwendung der Serviceoperation CSTA Service Conference Call gemäß ECMA-Richtlinie 269, 8th edition, June 2009, dar. Die Serviceoperation CSTA Service Conference Call wird hierbei verwendet, um eine Konferenz einzuleiten oder um einen Teilnehmer bei einer bestehenden Konferenz zu erweitern. Auf diese Weise erfolgt der Übergang der Verbindung des Konferenzraums über die Datenverbindung C3 an das Kommunikationsendgerät D1 zu der Verbindung des Konferenzraums CR in die bestehende Datenverbindung C2 mithin die Verbindung des Konferenzraums zu sämtlichen Endgeräten des bestehenden Mehrfachgesprächs 15 (D1, D2, D3).

Bei der in FIG. 3a schematisch dargestellten dritten Ausführungsform wird der Master, vertreten durch das Kommunikationsendgerät D1, direkt von dem Konferenzraum CR gerufen. Hierzu ist ein sofortiges Anklopfen des Konferenzraums bei dem Kommunikationsendgerät D1 als Master des bestehenden Mehrfachgesprächs, bei dem die Kommunikationsendgeräte D1, D2, D3 über die bestehende Datenverbindung C2 miteinander verbunden sind, gewährleistet. Das sofortige Anklopfen des Konferenzraums CR bei dem Kommunikationsendgerät D1 erfolgt in weniger als einer Sekunde. Der erfolgreiche direkte Ruf des Konferenzraums CR bei dem Kommunikationsendgerät D1 als Master des bestehenden Mehrfachgesprächs ist in FIG. 3a durch die Datenverbindurig C4 mit den Verbindungsteilstücken 23, 24 dargestellt, über die der Konferenzraum mit dem Kommunikationsendgerät D1 verbunden ist. Nach diesem ersten Schritt bzw. dieser ersten Stufe eines Direktrufes des Konferenzraums CR bei dem Kommunikationsendgerät D1 erfolgt in einem zweiten Schritt bzw. in einer zweiten Stufe ein Schalten des Konferenzraums CR in die bestehende Datenverbindung C2, wie dies als Pfeil 29 schematisch in FIG. 3a dargestellt ist. Das Schalten des Konferenzraums CR in die bestehende Datenverbindung C2 kann über die Serviceoperation CSTA Service Conference Call erfolgen. Nach dem Schalten des Konferenzraums CR in die bestehende Datenverbindung C2 ist der Konferenzraum CR, wie in FIG. 3b dargestellt, über das Verbindungsteilstück 26 mit den Kommunikationsendgeräten D1, D2, D3 über die bestehende Datenverbindung C2 mit den Verbindungsteilstücken 10, 11, 12 verbunden. Trotz der systeminternen Aneinanderreihung von mehreren Diensten, im Fall der dritten Ausführungsform der Erfindung, die in FIG. 3a bis 3c dargestellt ist, der erste Dienst oder die erste Serviceoperation des Direktrufes des Konferenzraums CR bei dem Kommunikationsendgerät D1 einerseits und das Schalten des Konferenzraums CR in die bestehende Datenverbindung C2 als zweiter Dienst bzw. als zweite Serviceoperation andererseits, ist die Übertragung der Steuerung des bestehenden Mehrfachgesprächs mit den Kommunikationsendgeräten D1, D2, D3 auf die Applikation KS aus Sicht der Teilnehmer des bestehenden Mehrfachgesprächs unterbrechungsfrei oder fast unterbrechungsfrei. Wie bereits erwähnt, kann das Schalten des Konferenzraums CR in die bestehende Datenverbindung C2 in erweiterter Anwendung der Serviceoperation CSTA Service Conference Call gemäß ECMA-Richtlinie 269, 8th edition, June 2009, erfolgen.

Nach dem Schalten des Konferenzraums CR in die bestehende Datenverbindung C2 mittels Aufbau des Verbindungsteilstückes 26 wird die Masterrolle, die vom Teilnehmer des Kommunikationsendgerätes D1 wahrgenommen wurde, auf den Konferenzraum übertragen, wie dies schematisch in FIG. 3c mit einem Pfeil 30 dargestellt ist. Danach liegt eine applikationsgesteuerte Konferenz mit dem virtuellen Teilnehmer in Form des Konferenzraums CR und den drei Teilnehmern der Kommunikationsendgeräte D1, D2, D3 vor. Sofern es sich bei dem Mehrfachgespräch, bei dem die Endgeräte, D1, D2, D3 miteinander verbunden sind, um eine Systemkonferenz handelte, ist aufgrund der Übertragung der Masterrolle von dem Kommunikationsendgerät D1 zu dem Konferenzraum CR die Systemkonferenz in eine applikationsgesteuerte Konferenz überführt worden. Hierdurch ist es dem Master der applikationsgesteuerten Konferenz möglich, weitere Teilnehmer in die Konferenz ohne ein manuelles Erweitern hinzuzufügen, so dass die bisherigen Teilnehmer der Konferenz in der vorhandenen Gesprächsverbindung C2 verbleiben. Da ein manuelles Erweitern der Konferenz um einen weiteren Teilnehmer, wie dies bei einer Systemkonferenz gegeben ist, bei einer applikationsgesteuerten Konferenz entfällt, kommt es bei dem Vorgang des Erweiterns der Konferenz um einen weiteren Teilnehmer nicht zu Unterbrechungen der Konferenz aufgrund der ansonsten erforderlichen Rückfrage bei dem einzubindenden Teilnehmer. Stattdessen werden alle Teilnehmer in Form des Konferenzraums CR und der Kommunikationsendgeräte D1, D2, D3 sowie weitere einzubindende Teilnehmer auf den Konferenzraum geschaltet, wobei der Konferenzraum die Eigenschaften des bisherigen Masters der Konferenz von dem Kommunikationsendgerät D1 übernommen bzw. "geerbt" hat. Das Übertragen der Masterrolle von dem Kommunikationsendgerät D1 auf den Konferenzraum CR ist abhängig von der Implementierung in der Plattform bzw. abhängig von den Fähigkeiten der Applikation KS bzw. des Konferenzservers. Beispielsweise kann der bisherige Konferenzleiter die applikationsgesteuerte Konferenz nur noch über die Applikation KS und nicht mehr über sein Kommunikationsendgerät D1 bedienen, wobei unter einem Bedienen das Erweitern oder Auslösen, also Beenden, der Konferenz verstanden wird. Durch die nicht mehr vorhandene Möglichkeit des Bedienens der Konferenz über das Kommunikationsendgerät D1 wird ein konkurrierender Zugriff auf die Konferenz, oder genauer die Steuerung der Konferenz, vermieden und es dem Konferenzleiter zudem ermöglicht, auch auf knotenfremde Teilnehmer der Konferenz, oder genauer die Kommunikationsendgeräte von Teilnehmern der Konferenz, die auf einem anderen Knoten angeordnet sind, als die bisherigen Kommunikationsendgeräte des bestehenden Mehrfachgesprächs, zuzugreifen.

In der vierten Ausführungsform der Erfindung, die schematisch in den FIG. 4a bis 4c dargestellt ist, wird der Konferenzraum CR direkt vom Master des bestehenden Mehrfachgesprächs 15 über dessen Kommunikationsendgerät D1 in die bestehende Verbindung C2 geschaltet. Dieses direkte Schalten des Konferenzraums CR in die bestehende Datenverbindung C2 kann über die Serviceoperation CSTA Service Single Step Conference Call erfolgen, und ist in FIG. 4a schematisch durch den Pfeil 39 dargestellt. Nach dem direkten Schalten des Konferenzraums in die bestehende Datenverbindung C2 ist der Konferenzraum CR über das Verbindungsteilstück 36 mit der bestehenden Datenverbindung C2, die die weiteren Verbindungsteilstücke 10, 11, 12 umfasst, mit den Kommunikationsendgeräten D1, D2, D3 verbunden (FIG. 4b).

In FIG. 4c ist dargestellt, dass die Rolle des Masters, die über das Kommunikationsendgerät D1 in dem bestehenden Mehrfachgespräch 15 wahrgenommen wurde, an den Konferenzraum CR übertragen wird, wie dies schematisch mit dem Fall 40 dargestellt ist. Die Verfahrensschritte des Schaltens des Konferenzraums CR in die bestehende Datenverbindung C2 und das Übertragen der Rolle des Masters von dem Kommunikationsendgerät D1 auf den Konferenzraum CR kann einschrittig oder einstufig mittels einer erweiterten Anwendung der Serviceoperation CSTA Service Single Step Conference Call gemäß ECMA-Richtlinie 269, 8th edition, June 2009, erfolgen. Diese einschrittige oder einstufige Anbindung des Konferenzraums CR an das bestehende Mehrfachgespräch 15 bzw. die bestehende Datenverbindung C2 des Mehrfachgesprächs 15 ist mit einer so kurzen Unterbrechung verbunden, dass diese Unterbrechung für die Teilnehmer des bestehenden Mehrfachgesprächs 15 nicht wahrnehmbar ist.

In den FIG. 5a, 5b und 5c ist schematisch eine fünfte Ausführungsform der Erfindung dargestellt, bei dem der Konferenzraum CR sich direkt in die bestehende Datenverbindung C2 des bestehenden Mehrfachgesprächs 15 mit den Kommunikationsendgeräten D1, D2 und D3 schaltet. Im Unterschied zu dem in den FIG. 4a bis 4c dargestellten Ausführungsbeispiel wird bei diesem fünften Ausführungsbeispiel der Konferenzraum nicht vom Master des bestehenden Mehrfachgesprächs 15 direkt in die bestehende Datenverbindung C2 geschaltet, sondern der Konferenzraum CR selbst schaltet sich durch entsprechende Anweisung der Applikation KS selbst in die bestehende Datenverbindung C2. Daher ist in FIG. 5a der Pfeil 49, der schematisch das direkte Schalten des Konferenzraums in die bestehende Datenverbindung C2 darstellt, vom Konferenzraum CR auf das Kommunikationsendgerät D1 gerichtet. Stattdessen ist in FIG. 4a der Pfeil 39, der das direkte Schalten des Konferenzraums CR in die bestehende Datenverbindung C2 ausgelöst durch das Kommunikationsendgerät D1 des Masters des bestehenden Mehrfachgesprächs 15 von dem Kommunikationsendgerät D1 in Richtung des Kommunikationsraums CR gerichtet. Während also bei dem in den FIG. 4a bis 4c dargestellten Ausführungsbeispiel der Master des bestehenden Mehrfachgesprächs 15 die Direktschaltung des Konferenzraums in die bestehende Datenverbindung C2 auslöst, löst bei der fünften Ausführungsform, die in den FIG. 5a bis 5c dargestellt ist, der Anwender der Applikation KS das Direktschalten des Konferenzraums CR in die bestehende Datenverbindung C2 aus. Nach der Schaltung des Konferenzraums CR in die bestehende Datenverbindung C2 ist der Konferenzraum CR, wie in FIG. 5b dargestellt, über das Verbindungsteilstück 46 in die bestehende Datenverbindung C2 geschaltet, so dass die Steuerung des bestehenden Mehrfachgesprächs über die Applikation KS und den Konferenzraum CR erfolgen kann, wenn die Masterrolle von dem Kommunikationsendgerät D1 des Masters des bisherigen Mehrfachgesprächs 15 auf den Konferenzraum CR übertragen ist, wie dies in FIG. 5c schematisch durch den Pfeil 50 dargestellt ist.

In einer sechsten Ausführungsform ist in den FIG. 6a bis 6c, vergleichbar dem fünften Ausführungsbeispiel, das in den FIG. 5a bis 5c dargestellt ist, der Konferenzraum durch eine Handlung des Anwenders der Applikation KS ausgelöst über das Verbindungsteilstück 56 in die bestehende Datenverbindung C2 geschaltet (FIG. 6b), nachdem das Schalten des Konferenzraums CR in die bestehende Datenverbindung C2, beispielsweise durch die Serviceoperation CSTA Service Join Call, wie dies durch den Pfeil 59 in FIG. 6a schematisch dargestellt ist. Entsprechend der Übertragung der Rolle des Masters des bestehenden Mehrfachgesprächs 15 über das Kommunikationsendgerät D1 auf den Konferenzraum CR gemäß dem Fall 50 in FIG. 5c wird in der FIG. 6c diese Masterrolle auf den Konferenzraum CR übertragen und damit dem Konferenzraum CR zugewiesen gemäß der schematischen Darstellung über den Pfeil 60. Im Unterschied zu der in den FIG. 5a bis 5c dargestellten fünften Ausführungsform ist bei der sechsten Ausführungsform gemäß den FIG. 6a bis 6c das bestehende Mehrfachgespräch 15 unter Verwendung der Kommunikationsgeräte D1, D2, D3, die über die Verbindungsteilstücke 10, 11, 12 der bestehenden Datenverbindung C2 miteinander verbunden sind, in einem Knoten KA angeordnet. Daneben ist die Applikation KS, die über die Verbindung 2 mit dem Konferenzraum CR verbunden ist und der Applikationsserver 1, auf dem die Applikation KS installiert ist, in einem weiteren Knoten KB angeordnet. Mittels des direkten Schaltens des Konferenzraums CR auf die bestehende Datenverbindung C2, wie dies durch den Pfeil 59 schematisch in FIG. 6a dargestellt ist, und dem Übertragen der Masterrolle von dem Kommunikationsendgerät D1 auf den Konferenzraum, wie dies schematisch durch den Pfeil 60 in FIG. 6c dargestellt ist, wird der Konferenzraum aus einem Netzwerk, das durch die Knoten KA und KB gebildet ist, heraus in das bestehende Mehrfachgespräch 15 eingebunden. Dieses einschrittige bzw. einstufige Einbinden des Konferenzraums CR in das bestehende Mehrfachgespräch 15 durch Schalten des Konferenzraums CR in die bestehende Datenverbindung C2 und Übertragen der Masterrolle von dem Kommunikationsendgerät D1 auf den Konferenzraum CR kann durch die Serviceoperation CSTA Service Join Call erfolgen. Diese Anwendung der Serviceoperation CSTA Service Join Call zur einschrittigen bzw. einstufigen Einbindung des Konferenzraums CR in ein bestehendes Mehrfachgespräch 15 zur Übertragung der Steuerung des bestehenden Mehrfachgesprächs auf die Applikation KS ist eine Anwendung des CSTA Service Join Call, die gemäß der Richtlinie ECMA-269 für Serviceoperationen gemäß CSTA bisher nicht dokumentiert ist.

In einer weiteren vernetzten Ausführungsform des erfindungsgemäßen Verfahrens zur Übertragung einer Steuerung eines bestehenden Mehrfachgesprächs auf die Applikation KS ist in den FIG. 7a und 7b die Einbindung des Konferenzraums CR in das bestehende Mehrfachgespräch 25 zum Aufbau einer Multinode-Konferenz dargestellt. Unter einer Multinode-Konferenz wird eine Konferenz verstanden, bei der mehrere Knoten als Netzknoten des Netzwerks in die zu bildende Konferenz eingebunden sind. In FIG. 7a ist ein Knoten KC dargestellt, in dem Kommunikationsendgeräte D1, D2, D3 über Verbindungsteilstücke 10, 12, 11 der bestehenden Datenverbindung C5 miteinander zur Führung eines bestehenden Mehrfachgesprächs 25 miteinander verbunden sind. Zusätzlich ist ein Netzwerk-Trunk T1 über das Verbindungsteilstück 61 an die bestehende Datenverbindung C5 angebunden. Der Netzwerk-Trunk T1 ermöglicht eine Zusammenführung mehrerer Übertragungskanäle, beispielsweise in Form physikalischer Leitungen oder in Form mehrerer Frequenzbänder, zu einer einzelnen logischen, also für den Betreiber des Netzwerk-Trunks einzelnen sichtbaren Verbindung. Im Gegensatz zu den vorherigen Ausführungsbeispielen der Erfindung in den FIG. 1 bis 6 ist in FIG. 7a der Konferenzraum CR vor Einbindung in das bestehende Mehrfachgespräch 25 bereits virtueller Teilnehmer einer applikationsgesteuerten Konferenz, die die Teilnehmer der Kommunikationsendgeräte D4 und D5 sowie den virtuellen Teilnehmer der Konferenz CR umfasst. Hierbei sind die Kommunikationsendgeräte D4, D5 über eine bestehende Datenverbindung C6 über das Verbindungsteilstück 62 mit dem Konferenzraum CR verbunden. Die bestehende Datenverbindung C6 umfasst die weiteren Verbindungsteilstücke 63, 64, wobei das Verbindungsteilstück 63 einen Netzwerk-Trunk T4 mit dem Konferenzraum CR verbindet, wobei der Netzwerk-Trunk T4 über das Verbindungsteilstück 67 mit einem weiteren Netzwerk-Trunk T6 verbunden ist, der seinerseits über Verbindungsteilstücke 71, 72 der bestehenden Datenverbindung C8 mit dem Kommunikationsendgerät D5 verbunden ist. Der Netzwerk-Trunk T3 ist über das Verbindungsteilstück 64 und das Verbindungsteilstück 62 mit dem Konferenzraum CR verbunden, wobei der Netzwerk-Trunk T3 über ein weiteres Verbindungsteilstück 68 mit einem Netzwerk-Trunk T5 verbunden ist, der seinerseits über Verbindungsteilstücke 73, 74 der bestehenden Datenverbindung C7 mit dem Kommunikationsendgerät D4 verbunden ist. Die Verbindungsteilstücke 67, 68 stellen Datenverbindungen des Knotens KE mit den Kommunikationsendgeräten D4, D5 und den Netzwerk-Trunks T5, T6 zu dem Kommunikationsknoten KD her, der neben der Applikation KS und dem Konferenzraum CR die Netzwerk-Trunks T3 und T4 umfasst. Zusätzlich zu den Netzwerk-Trunks T3, T4 des Knotens KD umfasst dieser Knoten einen weiteren Netzwerk-Trunk T2, der über das Verbindungsteilstück 65 und das Verbindungsteilstück 62 mit dem Konferenzraum CR verbunden ist.

Nach dem direkten Schalten des Konferenzraums CR in die bestehende Datenverbindung C5 ist der Konferenzraum CR, wie in FIG. 7b dargestellt, über die Netzwerk-Trunks T1 und T2 in das bestehende Mehrfachgespräch 25 mit den Endgeräten D1, D2, D3 geschaltet und mit diesen Endgeräten verbunden. Das Verbindungsteilstück 66, über das der Netzwerk-Trunk T1 des Knotens KC mit dem Netzwerk-Trunk T2 des weiteren Knotens KD verbunden ist, können nach Zuweisung der Masterrolle zu dem Konferenzraum CR Steuerungsbefehle der Applikation KS mittels des Masters CR an die Teilnehmer der nunmehr entstandenen applikationsgesteuerten Konferenz weitergeleitet werden, die die Kommunikationsendgeräte D1, D2, D3, D4 und D5 verwenden. Zusätzlich ist nach Einbindung des Konferenzraums CR in das bestehende Mehrfachgespräch 25 durch Schalten des Konferenzraums CR in die bestehende Datenverbindung C5 und Zuweisen der Masterrolle zu dem Konferenzraum CR eine Einbindung potentieller weiterer Teilnehmer in die vorhandene Multinode-Konferenz mit den Knoten KC, KD und KE möglich. In FIG. 7b ist hierzu ein weiterer Knoten KF dargestellt, der ein Kommunikationsendgerät D6 und einen Netzwerk-Trunk T8, die über Verbindungsteilstücke 76, 77 der bestehenden Datenverbindung C9 miteinander verbunden sind, dargestellt. Über einen weiteren Netzwerk-Trunk T7 des Netzknotens KC ist über das Verbindungsteilstück 75 der Netzwerk-Trunk T8 mit dem Konferenzraum CR in dem Knoten KD verbunden, wobei über die bestehende Datenverbindung C9 das weitere Kommunikationsendgerät D6 in die bestehende applikationsgesteuerte Konferenz mit den Kommunikationsendgeräten D1, D2, D3, D4, D5 eingebunden ist. Die auf diese Weise entstandene applikationsgesteuerte Konferenz umfasst mithin sechs Kommunikationsendgeräte D1 - D6, die von den jeweiligen Teilnehmern der Konferenz bedient werden, wobei die Steuerung dieser applikationsgesteuerten Konferenz mittels des Konferenzraums, der die Rolle des Masters zugewiesen bekommen hat, von der Applikation KS zur Steuerung dieser Konferenz wahrgenommen wird.

Bei der in FIG. 7b dargestellten siebten Ausführungsform kann der Knoten KD mit der Applikation KS die in Form von Software auf einem Konferenzserver, beispielsweise OpenScape Office der Siemens Enterprise Communications GmbH & Co.KG, ausgeführt sein kann, als Ursprungsknoten bezeichnet werden. Im Gegensatz zu dem Ursprungsknoten KD mit der Applikation KS und dem Konferenzraum CR können die Knoten KC, KE und KF, die jeweils Kommunikationsendgeräte D1, D2, D3 (Knoten KC), D4, D5 (Knoten KE) und D6 (Knoten KF) umfassen, als Zielknoten bezeichnet werden. Die Serviceoperation CSTA Service Join Call zum direkten Schalten des Konferenzraums CR in die bestehende Datenverbindung C5 kann über ein sogenanntes single-system-image, über das mehrere Knoten, die jeweils ein eigenständiges System bilden, als ein einziges System nach außen dargestellt werden, in der Form, dass die Applikation KS nicht zu wissen braucht, in welchem Knoten KC, KD, KE, KF eine Serviceoperation, auch Service genannt, abgesetzt werden muss (diese Kenntnis liegt bei einer sogenannten Middleware MW), mit zu dem single-system-image geeigneter Middleware MW auf den Ursprungsknoten KD abgesetzt werden (siehe Pfeil 70 in FIG. 7b). Diese Steuerinformation kann beispielsweise mittels einer geeigneten CorNet-NQ Facility Serviceoperation an die Zielknoten KC, KE und KF weitergeleitet werden, wodurch eine Multinode-Steuerung der applikationsgesteuerten Konferenz erfolgt. In den Zielknoten KC, KE, KF kann der jeweilige Netzwerk-Trunk T1 (Knoten KC), T5, T6 (Knoten KE) und T8 (Knoten KF) jeweils die Rolle des Masters als Proxy in dem lokalen Mehrfachgespräch übernehmen. So kann der Netzwerk-Trunk T1 als Proxy die Rolle des Masters für das bestehende Mehrfachgespräch D1, D2, D3 in dem Netzwerkknoten KC übernehmen. Sofern es sich bei dem Mehrfachgespräch 25 um eine Systemkonferenz handelt, übernimmt daher der Netzwerk-Trunk T1 als Proxy die Rolle des Masters in der lokalen im Netzwerkknoten KC stattfindenden Systemkonferenz, wobei durch die Einbindung des Konferenzraums CR in diese Systemkonferenz der Netzwerk-Trunk T1 diese ehemalige Systemkonferenz als applikationsgesteuerte Konferenz mit dem Konferenzraum CR als Master führt. Während für das Zuweisen der Masterrolle zu dem Konferenzraum CR ein Neuaushandeln der Masterrolle durch Übertragung der Masterrolle von dem bestehenden Mehrfachgespräch 25 auf den Konferenzraum CR erforderlich ist, ist das Zuweisen der Masterrolle zu dem Konferenzraum CR bei einem Mehrfachgespräch mit lediglich zwei Teilnehmern, wie dies bei dem Mehrfachgespräch 5, das in FIG. 1c dargestellt ist, nicht erforderlich. Der Netzwerk-Trunk T1 übernimmt die Rolle des Masters in der (ehemaligen) Systemkonferenz, in deren Rahmen das Mehrfachgespräch 25 geführt wird, lediglich als Proxy, wobei die Masterrolle dem Konferenzraum CR zugewiesen bleibt.

Die unter Bezug auf die dargestellten Ausführungsformen beschriebenen Merkmale der Erfindung, wie beispielsweise die Middleware MW in FIG. 7b mehrere bestehende Datenverbindungen C5, C6, C7, C8, C9 einer applikationsgesteuerten Konferenz nach Übertragen der Masterrolle auf den Konferenzraum CR oder das Vorhandensein einer applikationsgesteuerten Konferenz CR über die Applikation KS vor der Übertragung einer Steuerung eines bestehenden Mehrfachgesprächs 25 auf die Applikation KS, können auch bei anderen Ausführungsformen der Erfindung vorhanden sein, außer wenn es anders angegeben ist oder sich aus technischen Gründen von selbst verbietet.

Die erfindungsgemäße für die Teilnehmer eines bestehenden Mehrfachgesprächs unterbrechungsfreie oder fast unterbrechungsfreie Einbindung eines Konferenzraums in ein bestehendes Mehrfachgespräch, bei der die Steuerung des bestehenden Mehrfachgesprächs auf eine Applikation zur Steuerung einer Konferenz mit einer gegenüber dem Stand der Technik verringerten Unterbrechungsdauer übertragen wird, ermöglicht dem Leiter der Konferenz ohne Zeitverlust die Übertragung der manuellen Führung eines Mehrfachgesprächs im Rahmen einer Systemkonferenz an eine Applikation zum Aufbau einer applikationsgesteuerten Konferenz. Durch Übergabe der Steuerung des Mehrfachgesprächs an die Applikation kann der Konferenzleiter Vorteile der Applikation nutzen bei gleichzeitiger Möglichkeit, das bestehende Mehrfachgespräch mittels der Applikation zu erweitern. Darüber hinaus bietet das erfindungsgemäße Verfahren die Möglichkeit, die maximale Anzahl der Teilnehmer eines Mehrfachgesprächs zu erhöhen im Rahmen der nach Übertragung der Steuerung des Mehrfachgesprächs auf die Applikation entstandenen applikationsgesteuerten Konferenz. Dadurch ergeben sich folgende neue Aspekte für Applikationen zur Steuerung einer Konferenz, die zum Ausführen des erfindungsgemäßen Verfahrens verwendet werden:
- verbesserte Benutzerführung,
- optimierter Ablauf der Konferenz,
- schnellerer und für die Teilnehmer der Konferenz unterbrechungsfreier oder fast unterbrechungsfreier Gesprächsaufbau,
- vereinfachtes Gesprächshandling, und
- vereinfachte Erhöhung der Anzahl der Teilnehmer der Konferenz.

## Patentansprüche

1. Verfahren zur Übertragung einer Steuerung eines bestehenden Mehrfachgesprächs (5; 15; 25), das als Gespräch zwischen zwei Teilnehmern oder im Rahmen einer Systemkonferenz geführt wird und bei dem mindestens zwei Kommunikationsendgeräte (D1, D2; D1, D2, D3) der mindestens zwei Teilnehmer durch eine Datenverbindung (C1; C2; C5) miteinander zum Austausch von Sprach- und/oder Bilddaten verbunden sind, wobei die Steuerung über eine Benutzerschnittstelle eines der mindestens zwei Kommunikationsendgeräte (D1, D2; D1, D2, D3) erfolgt, auf eine Applikation (KS) zur Steuerung einer Konferenz, die als applikationsgesteuerte Konferenz in einem Konferenzserver (1) ausgeführt ist, wobei die Übertragung der Steuerung des bestehenden Mehrfachgesprächs (5; 5; 25) auf die Applikation zur Steuerung der Konferenz durch die folgenden Schritte erfolgt:
- Einrichten eines virtuellen Konferenzraums (CR), der einen Ankerpunkt für die Applikation (KS) bilden und ein virtueller Teilnehmer der applikationsgesteuerten Konferenz sein kann,
- Einbinden (9; 19; 29; 39; 49; 59) des Konferenzraums (CR) in die bestehende Datenverbindung (C1; C2; C5) des Mehrfachgespräches (5; 15; 25) ein- oder mehrstufig über einen CTI-Link durch Verwendung der Serviceoperation CSTA Service Join Call oder durch Verwendung eines Vernetzungsprotokolls, wie z.B. CorNet-NQ, QSIG, SIP oder H.323, in Verbindung mit einem Anklopfen "Camp-On" und der Serviceoperation CSTA Service Conference Call, und
- Zuweisen (8; 20; 30; 40; 50; 60) einer Masterrolle zu dem Konferenzraum (CR), wobei eine von der Applikation (KS) durchgeführte Signalisierung das Einbinden (9; 19; 29; 39; 49; 59) des Konferenzraums (CR) in die bestehende Datenverbindung (C1; C2; C5) und das Zuweisen (8; 20; 30; 40; 50; 60) der Masterrolle zu dem Konferenzraum (CR) bewirkt.

2. Verfahren nach Anspruch 1, wobei der Konferenzraum (CR) durch die Applikation (KS) eingerichtet wird.

3. Verfahren nach einem der Ansprüche 1 oder 2, bei dem das Mehrfachgespräch (15, 25) derart besteht, dass mindestens drei Kommunikationsendgeräte (D1, D2; D1, D2, D3) miteinander verbunden sind.

4. Verfahren nach Anspruch 3, bei dem
das Zuweisen der Masterrolle zu dem Konferenzraum (CR) durch ein Übertragen (20; 30; 40; 50; 60) einer Masterrolle eines Masters des Mehrfachgesprächs (15; 25) von einem (D1) der mindestens zwei Kommunikationsendgeräte (D1, D2; D1, D2, D3) an den Konferenzraum (CR) erfolgt.

5. Verfahren nach einem der vorhergehenden Ansprüche, bei dem aufgrund der Übertragung der Masterrolle von einem Kommunikationsendgerät (D1) zu dem Konferenzraum (CR) die Systemkonferenz (KA, KC) in eine applikationsgesteuerte Konferenz eingebunden (KA, KB) oder überführt (KC, KD, KE) wird.

6. Verfahren nach Anspruch 5, bei dem
systemgesteuerte Konferenzkanäle der Systemkonferenz in applikationsgesteuerte Kanäle der Applikation (KS) zur Steuerung einer Konferenz umgesetzt werden.

7. Verfahren nach einem der Ansprüche 4 bis 6, bei dem vor dem Schalten (19; 29; 39; 49; 59) des Konferenzraums (CR) in die bestehende Datenverbindung (C2; C5) ein Anklopfen des Konferenzraums (CR) bei dem Kommunikationsendgerät (D1) des Masters des Mehrfachgesprächs (15; 25) in weniger als einer Sekunde erfolgt, dass eine Unterbrechung der Übertragung der Steuerung des Mehrfachgesprächs (15; 25) auf die Applikation (KS) von Teilnehmern des Mehrfachgesprächs (15; 25) nicht wahrgenommen wird.

8. Verfahren nach einem der vorhergehenden Ansprüche, bei dem nach Zuweisen der Masterrolle an den Konferenzraum (CR) mittels der Applikation (KS) weitere Kommunikationsendgeräte (D4, D5; D4, D5, D6) knotenübergreifend in das Mehrfachgespräch (5; 15; 25) aufgenommen werden.

9. Verfahren nach einem der vorhergehenden Ansprüche, bei dem der Konferenzraum (CR) in einem Ursprungsknoten (KD) eines Netzwerks in die bestehende Datenverbindung (C1; C2; C5) in einem Zielknoten (KC) des Netzwerks geschaltet wird und ein Netzwerk-Trunk (T1) in dem Zielknoten (KC) als Proxy die Masterrolle wahrnimmt.

10. Verfahren nach einem der vorhergehenden Ansprüche, bei dem eine Serviceoperation zum Schalten des Konferenzraums (CR) in einem Ursprungsknoten (KD) in die bestehende Datenverbindung (C1; C2; C5) in einem Zielknoten (KC) über ein single-system-image auf den Ursprungsknoten (KD) abgesetzt wird.

11. Verfahren nach einem der vorhergehenden Ansprüche, bei dem die Applikation (KS) als Konferenzserver ausgeführt wird.

12. Computerprogrammprodukt zum Ausführen des Verfahrens nach einem der Ansprüche 1 bis 11.

13. Applikationsserver (1), auf dem das Computerprogrammprodukt nach Anspruch 12 installiert ist.

## Claims

1. A method for transmitting a control [command] for an existing multi-conversation [or: conference call] (5; 15; 25), which is conducted as a conversation between two participants or as part of a system conference, wherein at least two communication terminals (Dl, D2; Dl, D2, D3) of the at least two participants are connected to one another via a data connection (CI; C2; C5) in order to exchange voice and/or image data, and wherein the control [command] occurs via a user interface for one of the at least two communication terminals (Dl, D2; Dl, D2, D3) on an application (KS) for controlling a conference, which is conducted as an application-controlled conference in a conference server (1), whereby the transmission of the control [command] of the existing multi-conversation (5; 5; 25) to the application for controlling the conference is performed by the following steps:
- Setting up a virtual conference room (CR), which may be an anchor point for the application (KS) and a virtual participant of the application-controlled conference;
- Integrating (9; 19; 29; 39; 49; 59) the conference room (CR) into the existing data connection (CI; C2; C5) of the multi-conversation (5; 15; 25) in one or more stages via a CTI link by using the service operation CSTA Service Join Call or a networking protocol, such as CorNet-NQ, QSIG, SIP or H.323, in combination with "Camp-On" and the service operation CSTA Service Conference *call;* and
- Assigning (8; 20; 30; 40; 50; 60) a master role to the conference room (CR), whereby signaling performed by the application (KS) causes the integration (9; 19; 29; 39; 49; 59) of the conference room (CR) into the existing data connection (CI; C2; C5) and the assignment (8; 20; 30; 40; 50; 60) of the master role to the conference room (CR).

2. A method According to claim 1, wherein the conference room (CR) is set up by the application (KS).

3. A Method according to one of claims 1 or 2, wherein the multi-conversation (15, 25) occurs such that at least three communication terminals (Dl, D2, Dl, D2, D3) are interconnected.

4. A method according to claim 3, wherein the master role is assigned to the conference room (CR) by transmitting (20; 30; 40; 50; 60) a master role for a master of the multi-conversation (15; 25) from one (D1) of the at least two communication terminals (Dl, D2; Dl, (Dl, D2, Dl, D2, D3) to the conference room (CR).

5. A method according to one of the preceding claims, in which the system conference (KA, KC) is integrated (KA, KB) into or transferred (KC, KD, KE) to an application-controlled conference, due to the transfer of the master role from a communication terminal (D1) to the conference room (CR).

6. A method according to Claim 5, in which system-controlled conference channels of the system conference are converted into application-controlled channels of the application (KS) for controlling a conference.

7. A method according to one of Claims 4 to 6, in which, before switching (19; 29; 39; 49; 59) the conference room (CR) to the existing data connection (C2; C5), the conference room (CR) initiates a camp-on call to the communication terminal (Dl) of the master of the multi-conversation (15; 25) in less than a second, such that an interruption of the transmission of the control [command] for the multi-conversation (15; 25) to the application (KS) will not be perceived by the participants in the multi-conversation (15;25) [somewhat uncertain translation due to unclear referentiation].

8. A method according to one of the preceding claims, in which after assigning the master role to the conference room (CR) via the application (KS), further communication terminals (D4, D5, D4, D5, D6) are incorporated into the multi-conversation (5; 15; 25) across nodes.

9. A method according to one of the preceding claims, in which the conference room (CR) in an originating node (KD) of a network is switched to the existing data connection (C1; C2; C5) in a destination node (KC) of the network, and a network trunk (TI) in the destination node (KC) carries out [?] the master role as proxy.

10. A method according to one of the preceding claims, in which a service operation for switching the conference room (CR) in an originating node (KD) to the existing data connection (CI; C2; C5) in a destination node (KC) is transmitted [?] via a single system image to the originating node (KD).

11. A method according to one of the preceding claims, in which the application (KS) is implemented as a conference server.

12. A software product for carrying out the method according to one of Claims 1 to 11.

13. An application server (1) on which the software product according to claim 12 is installed.

## Revendications

1. Procédé pour la transmission d'une commande d'une communication multiple existante (5 ; 15 ; 25) qui est menée en tant que communication entre deux participants ou dans le cadre d'une conférence système et dans lequel au moins deux terminaux de communication (D1, D2 ; D1, D2, D3) des au moins deux participants sont reliés ensemble par le biais d'une liaison de données (C1 ; C2 ; C5) pour un échange de données vocales et/ou graphiques, dans lequel la commande s'effectue via une interface utilisateur d'un des au moins deux terminaux de communication (D1, D2 ; D1, D2, D3), à une application (KS) pour la commande d'une conférence, qui est exécutée en tant que conférence commandée par une application dans un serveur de conférence (1), dans lequel la transmission de la commande de la communication multiple existante (5; 5 ; 25) à l'application pour la commande de la conférence s'effectue par le biais des étapes suivantes :
- configuration d'une salle de conférence virtuelle (CR), qui peut former un point d'ancrage pour l'application (KS) et être un participant virtuel à la conférence commandée par une application,
- intégration (9; 19; 29 ; 39 ; 49 ; 59) de la salle de conférence (CR) dans la liaison de données existante (C1 ; C2 ; C5) de la communication multiple (5; 15; 25) en une ou plusieurs étapes via un lien CTI par le biais de l'utilisation de l'opération de service CSTA Service Join Call ou par le biais de l'utilisation d'un protocole de mise en réseau, comme par exemple CorNet-NQ, QSIG, SIP ou H.323, en liaison avec une signalisation d'appel en attente « Camp-On » et l'opération de service CSTA Service Conference Call, et
- attribution (8 ; 20 ; 30 ; 40 ; 50 ; 60) d'un rôle maître à la salle de conférence (CR), dans lequel une signalisation réalisée par l'application (KS) amène l'intégration (9 ; 19 ; 29 ; 39 ; 49 ; 59) de la salle de conférence (CR) dans la liaison de données existante (C1 ; C2 ; C5) et l'attribution (8 ; 20 ; 30 ; 40 ; 50 ; 60) du rôle maître à la salle de conférence (CR).

2. Procédé selon la revendication 1, dans lequel la salle de conférence (CR) est configurée par le biais de l'application (KS) .

3. Procédé selon l'une des revendications 1 ou 2, dans lequel la communication multiple (15, 25) est telle qu'au moins trois terminaux de communication (D1, D2 ; D1, D2, D3) sont reliés ensemble.

4. Procédé selon la revendication 3, dans lequel l'attribution du rôle maître à la salle de conférence (CR) s'effectue par le biais d'une transmission (20 ; 30 ; 40 ; 50 ; 60) d'un rôle maître d'un maître de la communication multiple (15 ; 25) par un (D1) des au moins deux terminaux de communication (D1, D2 ; D1, D2, D3) à la salle de conférence (CR).

5. Procédé selon l'une des revendications précédentes, dans lequel en raison de la transmission du rôle maître d'un terminal de communication (D1) à la salle de conférence (CR) la conférence système (KA, KC) est intégrée (KA, KB) ou transférée (KC, KD, KE) dans une conférence commandée par une application.

6. Procédé selon la revendication 5, dans lequel des canaux de conférence de la conférence système commandés par un système sont transformés en canaux de l'application (KS) commandés par l'application pour la commande d'une conférence.

7. Procédé selon l'une des revendications 4 à 6, dans lequel avant l'intégration (19 ; 29 ; 39 ; 49 ; 59) de la salle de conférence (CR) dans la liaison de données existante (C2 ; C5) une signalisation d'appel en attente de la salle de conférence (CR) au niveau du terminal de communication (D1) du maître de la communication multiple (15 ; 25) s'effectue en moins d'une seconde, en ce qu'une interruption de la transmission de la commande de la communication multiple (15; 25) à l'application (KS) n'est pas perçue par les participants à la communication multiple (15 ; 25).

8. Procédé selon l'une des revendications précédentes, dans lequel après l'attribution du rôle maître à la salle de conférence (CR) au moyen de l'application (KS) d'autres terminaux de communication (D4, D5; D4, D5, D6) sont enregistrés par chevauchement de noeuds dans la communication multiple (5 ; 15 ; 25).

9. Procédé selon l'une des revendications précédentes, dans lequel la salle de conférence (CR) dans un noeud d'origine (KD) d'un réseau est intégrée dans la liaison de données existante (C1 ; C2 ; C5) dans un noeud cible (KC) du réseau et une jonction de réseau (T1) dans le noeud cible (KC) perçoit le rôle maître en tant que serveur mandataire.

10. Procédé selon l'une des revendications précédentes, dans lequel une opération de service pour l'intégration de la salle de conférence (CR) dans un noeud d'origine (KD) est transmise dans la liaison de données existante (C1 ; C2 ; C5) dans un noeud cible (KC) via une image de système unique sur le noeud d'origine (KD).

11. Procédé selon l'une des revendications précédentes, dans lequel l'application (KS) est exécutée en tant que serveur de conférence.

12. Produit de programme informatique pour l'exécution du procédé selon l'une des revendications 1 à 11.

13. Serveur d'application (1), sur lequel est installé le produit de programme informatique selon la revendication 12.
